# EUROPEAN PATENT SPECIFICATION

(11) **EP 3 188 982 B1**
(45) Date of publication and mention of the grant of the patent: **17.06.2020**
(21) Application number: 15838220.0
(22) Date of filing: 04.09.2015
(51) Int. Cl.: B65D 81/24

(54) **FOOD STORAGE SYSTEM COMPRISING A CONTAINER AND AN ADSORBENT MATERIAL AND METHOD FOR EXTENDING THE SHELF LIFE OF A PRODUCT**
SYSTEM ZUR LEBENSMITTELAUFBEWHRUNG MIT EINEM BEHÄLTER UND EINEM ADSORBIERENDEN MATERIAL UND VERFAHREN ZUR VERLÄNGERUNG DER HALTBARKEIT EINES PRODUKTS
SYSTÈME DE STOCKAGE D'ALIMENTS COMPRENANT UN RÉCIPIENT ET UN MATÉRIAU ADSORBANT AINSI QUE MÉTHODE POUR PROLONGER LA DURÉE DE CONSERVATION D'UN PRODUIT

(30) Priority: 05.09.2014 US 201462046667 P
(43) Date of publication of application: 12.07.2017
(73) Proprietor: BASF Corporation, Florham Park, NJ 07932 (US)
(72) Inventor: EDGINGTON, Todd, Holly Springs, NC 27540 (US); NATU, Abhijit, Florham Park, NJ 07932 (US); ARNOLD, Lena, 2040 Antwerpen (BE); LECLERC, Nicholas R., Hillsborough, NJ 08844 (US); MAURER, Stefan, Shanghag 201206 (CN); MARX, Stefan, 67056 Ludwigshafen am Rhein (DE); MÜLLER, Ulrich, 67056 Ludwigshafen am Rhein (DE)
(74) Representative: BASF IP Association
(86) International application number: PCT/US2015/048516
(87) International publication number: WO 2016/037043

(56) References cited:
- EP-A1- 1 118 551
- EP-A1- 1 298 072
- US-A- 4 337 276
- US-A1- 2004 120 921
- US-A1- 2004 210 099
- US-A1- 2011 318 460
- US-A1- 2012 016 066
- US-A1- 2012 016 066
- US-A1- 2014 202 183

## Description

### BACKGROUND OF THE INVENTION

Losses in quantity and quality affect fresh fruit, vegetables, flowers, bulbs, seeds and nuts, corms, rhizomes, tubers, and other types of produce between harvest and consumption. The magnitude of postharvest losses in fresh produce is an estimated 5-50% depending on location, commodity, cultivar, and handling conditions. Senescence is the final stage of the development of plant organs, during which a series of irreversible events leads to the breakdown and death of the plant cells. During the senescence process, the horticultural commodity is in the process of anaerobic respiration consuming oxygen and stored organic materials while releasing carbon dioxide, water vapor, ethylene, and other volatile compounds (esters, ketones, jasmonate, etc.).

To reduce losses associated with senescence, the biological and environmental factors involved in deterioration should be understood in order to apply postharvest techniques (e.g., storage techniques) that delay senescence and maintain the best possible quality of produce. US 2012/016066 A1 discloses a biodegradable material, wherein metal organic framework is dispersed therein. Said material is used to prepare food packaging. EP 1298072 A1 and EP 1118551 A1 disclose food storage systems and methods using an adsorbent which can comprise zeolites or carbon.

### SUMMARY OF THE DISCLOSURE

The following presents a simplified summary of various aspects of the present disclosure in order to provide a basic understanding of such aspects. This summary is not an extensive overview of the disclosure. It is intended to neither identify key or critical elements of the disclosure, nor delineate any scope of the particular embodiments of the disclosure or any scope of the claims. Its sole purpose is to present some concepts of the disclosure in a simplified form as a prelude to the more detailed description that is presented later. Embodiments of the invention are disclosed in the appended claims.

In one aspect of the present disclosure, a food storage system includes a container; and an adsorbent material in which a Langmuir surface area of the adsorbent material is at least about 500 m²/g, and an average pore diameter of the adsorbent material is at least about 0.3 nm wherein the adsorbent material includes at least one of metal organic framework (MOF), zeolite, activated carbon, or potassium permanganate and wherein the MOF is in a form of a powder, pellets, extrudates, granulates, or a free-standing film.

In certain embodiments the Langmuir surface area of the adsorbent material is at least about 700 m²/g. In certain embodiments the Langmuir surface area of the adsorbent material is at least about 900 m²/g. In certain embodiments the Langmuir surface area of the adsorbent material is at least about 1100 m²/g. In certain embodiments the Langmuir surface area of the adsorbent material is at least about 1500 m²/g. In certain embodiments the Langmuir surface area of the adsorbent material is at least about 1700 m²/g. In certain embodiments the Langmuir surface area of the adsorbent material is at least about 2000 m²/g. In certain embodiments the Langmuir surface area of the adsorbent material is at least about 2500 m²/g.

In certain embodiments the average pore diameter of the adsorbent material is between about 0.3 nm and about 10 nm. In certain embodiments the average pore diameter of the adsorbent material is between about 0.3 nm and about 2 nm. In certain embodiments the average pore diameter of the adsorbent material is between about 0.3 nm and about 0.7 nm. In certain embodiments the average pore diameter of the adsorbent material is between about 0.9 nm and about 1.5 nm. In certain embodiments the adsorbent material has a C₂H₄ adsorption capacity of at least about 50 cm³/g when a temperature within the container is within a temperature range and an air pressure within the container is within a pressure range. In certain embodiments the adsorbent material has a CO₂ adsorption capacity of at least about 40 cm³/g when a temperature within the container is within a temperature range and an air pressure within the container is within a pressure range.

In certain embodiments the adsorbent material has an O₂ adsorption capacity of at least about 8 cm³/g when a temperature within the container is within a temperature range and an air pressure within the container is within a pressure range.

In certain embodiments the adsorbent material has an H₂O adsorption capacity that is at least about 15% of a total weight of the adsorbent material when a temperature within the container is within a temperature range and an air pressure within the container is within a pressure range. In certain embodiments the H₂O adsorption capacity is at least about 15% of the total weight of the adsorbent material when a relative humidity within the container is at least about 75%. In certain embodiments the H₂O adsorption capacity is at least about 15% of the total weight of the adsorbent material when a relative humidity within the container is between about 80% and about 90%. In certain embodiments, the H₂O adsorption capacity is at least about 15% of the total weight of the adsorbent material when a relative humidity within the container is greater than 90%.

In certain embodiments the temperature range is between about 0°C and about 40°C, and wherein the pressure range is between about 500 mmHg and about 1000 mmHg. In certain embodiments the food storage system of claim 13, wherein the pressure range is between about 800 mmHg and about 1000 mmHg. In certain embodiments the temperature range is between about 0°C and about 30°C. In certain embodiments the temperature range is between about 0°C and about 10°C.

In certain embodiments the adsorbent material is disposed within the container. In certain embodiments the container is a sealed produce package. In certain embodiments the sealed produce package includes at least one of polypropylene, polypropylene fibers, polyethylene, polystyrene, polyethylene terephthalate, polyethylene terephthalate fibers, polyester, flash-spun high-density polyethylene, molded fiber, aluminum, nylon polyamide, pressed paperboard, or biodegradable versions thereof. In certain embodiments the container is a shipping container. In certain embodiments the adsorbent material is dispersed within the container.

In certain embodiments the adsorbent material is disposed within a sachet within the container. In certain embodiments the sachet is perforated.

In certain embodiments the adsorbent material is disposed along an interior surface of the container. In certain embodiments the adsorbent material is integrally formed or extruded with at least one interior surface of the container. In certain embodiments the adsorbent material is disposed or dispersed within a multi-layered film.

In certain embodiments the container contains one or more of produce, seeds, or nuts. In certain embodiments the container contains produce, and the produce includes one or more of fruits, vegetables, herbs, flowers, or plants, and may include one or more of bananas, strawberries, mangos, watermelons, oranges, pineapples, grapes, apples, peaches, cherries, kiwis, raspberries, blueberries, pomegranates, lemons, pears, passion fruit, plums, apricots, blackberries, tangerines, dragon fruit, grapefruits, limes, cantaloupes, nectarines, avocados, tomatoes, coconuts, potatoes, alfalfa sprouts, corn, carrots, onions, broccoli, lettuce, cabbage, kale, arugula, peas, garlic, cucumbers, green beans, mushrooms, sweet potatoes, peppers, spinach, asparagus, olives, celery, cauliflower, Brussels sprouts, squash, zucchini, eggplant, pumpkins, beets, lima beans, radishes, parsnips, cilantro, or basil. In certain embodiments the adsorbent material is disposed at least partially on the produce.

The adsorbent material includes at least one of metal organic framework (MOF), zeolite, activated carbon, or potassium permanganate.

In certain embodiments the adsorbent material includes MOF wherein the MOF is in a form of a powder, pellets, extrudates, granulates, or a free-standing film. In certain embodiments the MOF is in the form of MOF particles. In certain embodiments the MOF particles have an average particle diameter of at least about 5 micrometers. In certain embodiments the MOF particles have an average particle diameter of at least about 1 micrometer. In certain embodiments the MOF particles have an average particle diameter between about 5 micrometers and about 100 micrometers.

In certain embodiments the MOF particles include a metal selected from the group consisting of Li, Mg, Ca, Sc, Y, Zr, V, Mn, Fe, Cu, Zn, B, Al, and a combination thereof. In certain embodiments the MOF particles include a metal selected from the group consisting of Al, Mg, Zn, Cu, Zr, and a combination thereof. In certain embodiments the MOF particles include a moiety selected from the group consisting of a phenyl moiety, an alkane moiety, an alkyne moiety, an imidazole moiety, a pyridine moiety, a pyrazole moiety, an oxole moiety, and a combination thereof. In certain embodiments the MOF particles include at least one moiety selected from the group consisting of fumaric acid, formic acid, 2-methylimidazole, and trimesic acid.

In certain embodiments the adsorbent material includes a zeolite. In certain embodiments a chemical formula of the zeolite is of a form of M_{*x*/*n*}[(AlO₂)x(SiO₂)_{y}]·*m*H₂O, where x, *y, m*, and n are integers greater than or equal to 0, and M is a metal selected from the group consisting of Na and K.

In other embodiments the adsorbent material is a zeolitic material having a framework structure composed of YO₂ and X₂O₃, in which Y is a tetravalent element and X is a trivalent element. In one embodiment Y is selected from the group consisting of Si, Sn, Ti, Zr, Ge, and combinations of two or more thereof. In one embodiment Y is selected from the group consisting of Si, Ti, Zr, and combinations of two or more thereof. In one embodiment Y is Si and/or Sn. In one embodiment Y is Si. In one embodiment X is selected from the group consisting of Al, B, In, Ga, and combinations of two or more thereof. In one embodiment X is selected from the group consisting of Al, B, In, and combinations of two or more thereof. In one embodiment X is Al and/or B. In one embodiment X is Al.

In certain embodiments the zeolite is in a form of particles, pellets, extrudates, granulates, a powder, or a free-standing film. In certain embodiments the zeolite is in a form of zeolite particles. In certain embodiments the zeolite particles have an average particle diameter of at least about 1 micrometer. In certain embodiments the Langmuir surface area of the zeolite particles is between about 500 m²/g and about 700 m²/g.

In certain embodiments the adsorbent material is a composite material including a MOF material and a non-MOF material. In certain embodiments a ratio of a mass of the MOF material to a total mass of the adsorbent material is greater than 0.5. In certain embodiments the non-MOF material is a material selected from the group consisting of a biodegradable polymer, a non-biodegradable polymer, a zeolite, and combinations thereof. In certain embodiments a morphology of the adsorbent material is selected from the group consisting of a homogenous mixture, a lamellar structure, a core-shell structure, a graduated material structure, spherical or non-spherical particles embedded within a matrix, fibers or rods embedded within a matrix, woven or non-woven fiber fabric, and interpenetrating network. In certain embodiments the morphology of the adsorbent material is a lamellar structure, wherein one or more layers of the MOF material are separated by one or more layers of the non-MOF material.

In certain embodiments the adsorbent material includes a first adsorbent composition and a second adsorbent composition. In certain embodiments the first adsorbent composition includes a first plurality of MOF particles including aluminum and fumaric acid, and wherein the second adsorbent composition includes a second plurality of MOF particles including zinc and 2-methylimidazole. In certain embodiments a mass ratio of the first adsorbent composition to the second adsorbent composition at least about 1. In certain embodiments the first adsorbent composition includes a first plurality of MOF particles including aluminum and fumaric acid, and wherein the second adsorbent composition includes a second plurality of zeolite particles including aluminum oxide and silicon oxide. In certain embodiments a mass ratio of the first adsorbent composition to the second adsorbent composition is at least about 3. In certain embodiments a total mass of the adsorbent material is at least about 500 mg. In certain embodiments, the total mass of the adsorbent material is at least about 250 mg. In certain embodiments, the total mass of the adsorbent material is at least about 100 mg. In certain embodiments, the total mass of the adsorbent material is at least about 50 mg.

In certain embodiments the adsorbent material is adapted to maintain a C₂H₄ concentration within the container below about 0.1% when produce is present in the container. In certain embodiments the C₂H₄ concentration within the container is maintained below about 0.1% for at least 5 days after the produce is introduced into the container. In certain embodiments the adsorbent material is adapted to maintain the C₂H₄ concentration within the container below about 0.05% when produce is present in the container. In certain embodiments the C₂H₄ concentration within the container is maintained below about 0.05% for at least 5 days after the produce is introduced into the container.

In certain embodiments the adsorbent material includes at least one porous MOF material, the at least one porous MOF material including at least one bidentate organic compound coordinated to at least one metal ion.

In certain embodiments the adsorbent material is adapted to adsorb organic chemical species. In certain embodiments the organic chemical species include volatile organic compounds. In certain embodiments the adsorbent material is adapted to adsorb chemical species including at least one ketone, aldehyde, ester, phenol, quinone, alcohols, or combinations thereof.

In certain embodiments, the food storage system further includes a refrigeration unit for maintaining a temperature of the food storage system between about 273 K and about 283 K.

In another aspect of the present disclosure, a food storage system includes a container, an adsorbent material disposed within the container, and produce disposed within the container, in which the produce generates C₂H₄, and the adsorbent material is adapted to maintain a C₂H₄ concentration within the container.

In another aspect of the present disclosure, a food storage system includes a container, a plurality of MOF particles dispersed within the container, and produce disposed within the container.

In another aspect of the present disclosure, a method for extending a shelf life of produce includes dispersing plurality of MOF particles within a container, placing the produce within the container, and sealing the container. In one embodiment a quality characteristic of the produce is maintained for a time duration. In one embodiment the quality characteristic includes at least one of color or texture. In one embodiment the time duration is at least about 15 days. In one embodiment the time duration is at least about 20 days.

### BRIEF DESCRIPTION OF THE DRAWINGS

The present disclosure is illustrated by way of example, and not by way of limitation, in the figures of the accompanying drawings, in which:
Figure 1 illustrates the flow of chemical species in an illustrative produce container according to an embodiment of the disclosure;
Figure 2 is a plot of ethylene adsorption isotherms for several adsorbent materials according to an embodiment of the disclosure;
Figure 3 is a plot of carbon dioxide adsorption isotherms for several adsorbent materials according to an embodiment of the disclosure;
Figure 4 is a plot of oxygen adsorption isotherms for several adsorbent materials according to an embodiment of the disclosure;
Figure 5 is a plot of water adsorption isotherms for several adsorbent materials according to an embodiment of the disclosure;
Figure 6 is a plot of water adsorption/desorption behavior for several adsorbent materials according to an embodiment of the disclosure;
Figure 7 shows different films covered with a film of an adsorbent material printed on a support according to an embodiment of the disclosure;
Figure 8A shows results of shelf life tests of iceberg lettuce with adsorbent materials in glass vessels according to an embodiment of the disclosure;
Figure 8B shows results of shelf life tests of iceberg lettuce with adsorbent materials in a sealed polyethylene bags according to an embodiment of the disclosure;
Figure 9A shows results of shelf life tests of iceberg lettuce with different mixtures of adsorbent materials according to an embodiment of the disclosure;
Figure 9B shows results of shelf life tests of iceberg lettuce with different mixtures of adsorbent materials according to an embodiment of the disclosure;
Figure 9C shows results of shelf life tests of iceberg lettuce with different mixtures of adsorbent materials according to an embodiment of the disclosure;
Figure 10 shows results of shelf life tests of iceberg lettuce for different types of adsorbent materials within standard packaging materials according to an embodiment of the disclosure;
Figure 11A shows an exemplary batch of sachets prepared according to an embodiment of the disclosure;

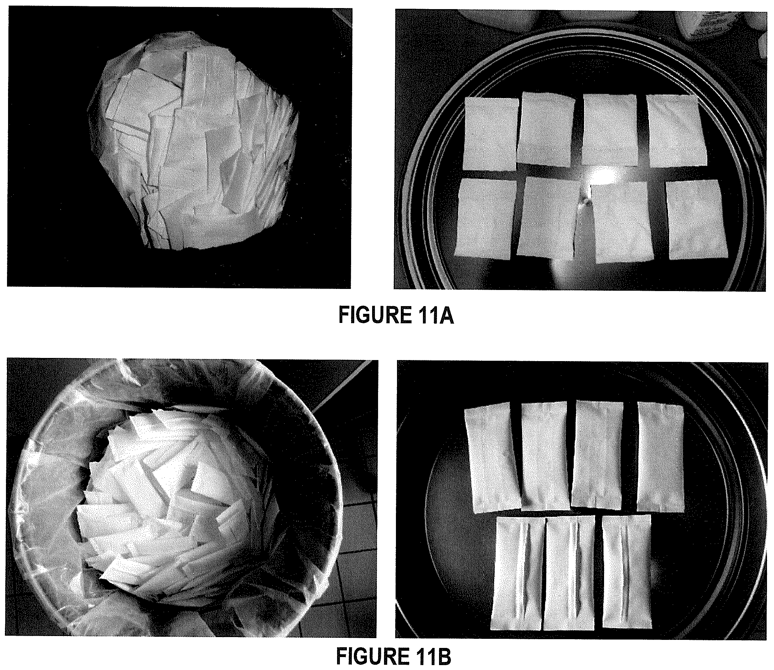

Figure 11A shows another exemplary batch of sachets prepared according to an embodiment of the disclosure;

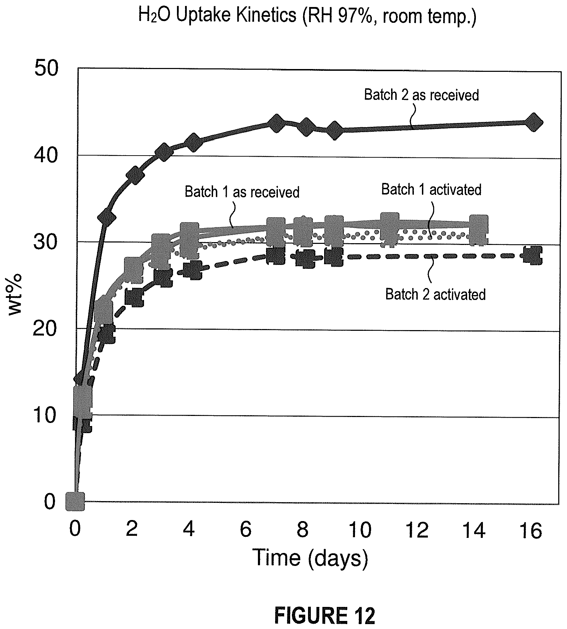

Figure 12 is a plot of water uptake kinetics for different sachets prepared according to embodiments of the disclosure;

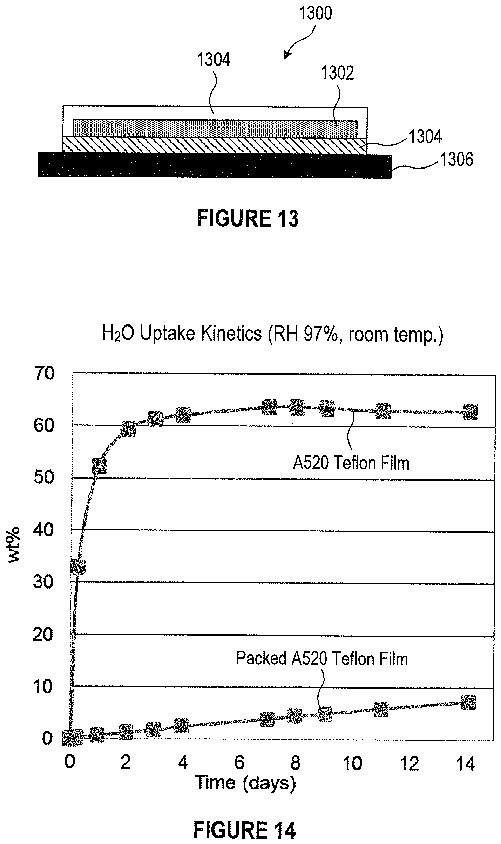

Figure 13 shows an example adsorbent film system for incorporation into a produce package or container according to an embodiment of the disclosure
Figure 14 is a plot of water uptake kinetics for adsorbent films prepared according to embodiments of the disclosure;

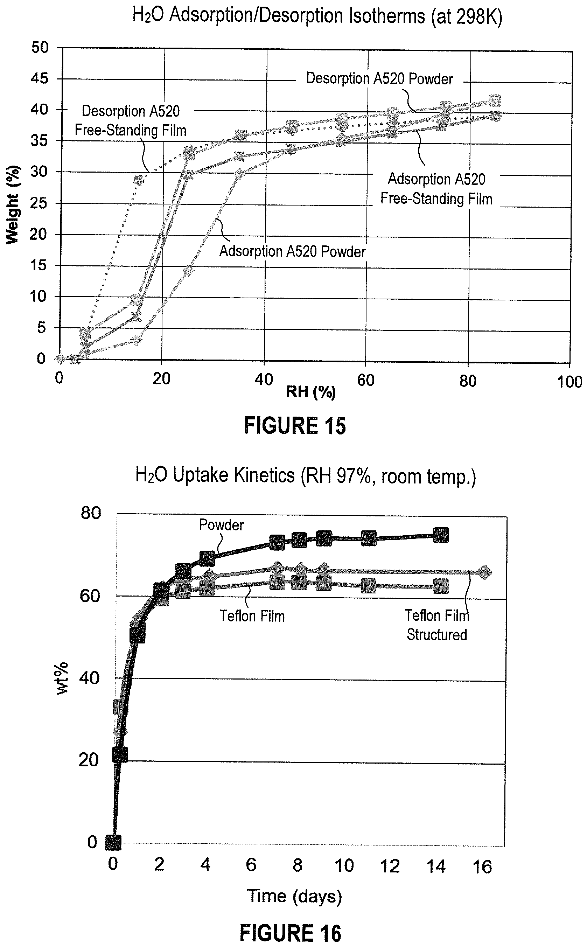

Figure 15 is a plot of water adsorption/desorption isotherms comparing the water uptake of a powdered adsorbent to that of a free-standing film of the adsorbent prepared according to an embodiment of the disclosure;
Figure 16 is a plot of water uptake kinetics comparing the water uptake of a powdered adsorbent to water uptake of adsorbent films prepared according to an embodiment of the disclosure;

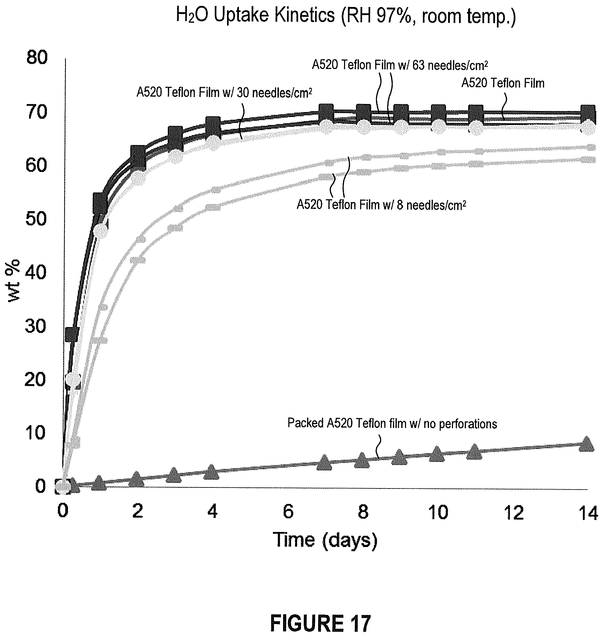

Figure 17 is a plot of water uptake kinetics for films with protective layers having different degrees of perforation prepared according to embodiments of the disclosure; and

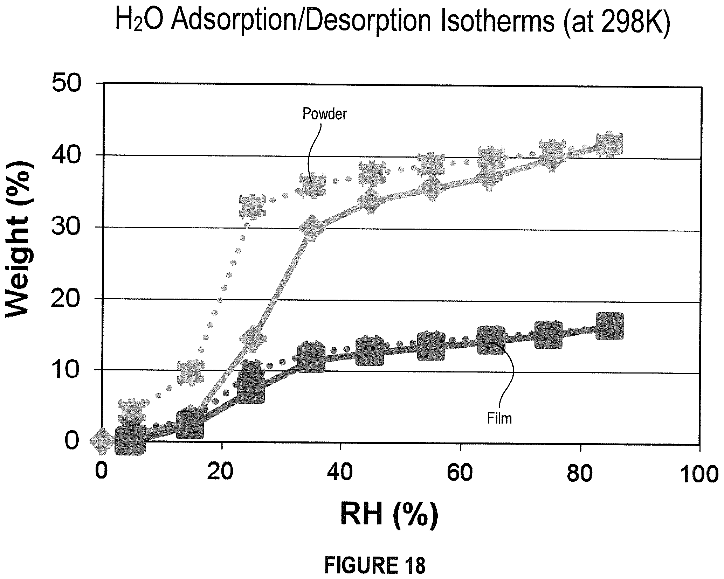

Figure 18 is a plot of a water adsorption isotherm comparing a MOF powder to a MOF coating prepared according to an embodiment of the disclosure.

### DETAILED DESCRIPTION

Managing the biological factors involved in senescence can significantly extend the postharvest shelf-life and quality of stored or packaged horticultural commodity. During storage and handling (bulk and consumer packaging), ethylene can cause accelerated senescence, high carbon dioxide can cause cosmetic and physiological injury, depleted oxygen can cause anaerobic respiration rending the commodity un-marketable, and high water vapor loss can cause wilting, marketable weight loss, and high water vapor in packaging and storage can cause accumulation of free-water which can favor microbial growth leading to food safety issues or commodity losses.

Today there are several shelf-life extending technologies available for use in storage, handling, packaging, and transit for fresh horticultural commodities. These include, controlled atmosphere storage and modified atmosphere packaging (low oxygen, high carbon dioxide, and water vapor), ethylene and carbon dioxide scrubbing, and postharvest fungicides and biocides. Adsorbent materials based on metal organic frameworks (MOFs) have the potential to replace, complement, or improve any of the above listed shelf-life extending technologies. Specific strategies to extend the shelf-life of fresh-cut and whole horticultural commodities/produce using MOFs include managing gas exchange and/or storage environment atmosphere carbon dioxide, oxygen, ethylene, water vapor (relative humidity), and other plant related volatiles either singularly, combined, or combinations by absorption/desorption within (1) modified atmosphere packaging (MAP) either incorporating the adsorbent material into packaging film, or package insert or applied to commodity directly; (2) consumer packaging either incorporating the adsorbent material into packaging material or package insert or applied to the product directly; (3) commercial bulk handling bins/containers (disposable or reusable), in corporating the adsorbent material in bulk bin and container liners, bulk bin and container inserts or covers, or applied to the commodity directly; (4) controlled atmosphere (CA) or regular atmosphere (RA) storage, ship cargo containers, semi-truck containers, rail cars, or consumer, retail, or wholesale refrigerator displays; and (5) ethylene and carbon dioxide scrubbing, oxygen removal or delivery, other volatile organic compound (VOC) delivery or scrubbing (fragrances, esters, ketones) materials.

Various advantages provided by the embodiments of the present disclosure include, but are not limited to, (1) extending shelf-life of horticultural commodities either whole, fresh-cut, potted plants, or flowers; (2) MOF delivery systems to ripen horticultural commodities either in storage or transit; (3) MOF scrubbing system for horticultural commodity storage environments; (4) protection of horticultural commodities from physiological disorders associated with toxic storage environments; and (5) MOF systems for storage and management of compounds that have the potential to be reused or recycled, i.e., carbon dioxide, oxygen, ethylene, fragrance or flavor VOCs.

MOF materials are typically in particle form and essentially consist of two types of building units: metal ions (e.g., zinc, aluminum) and organic compounds. Each of the organic compounds can attach to at least two metal ions (at least bidentate), serving as a linker for them. In this way a three dimensional, regular framework is spread apart, containing empty pores and channels, with the size of which being defined by the size of the organic linker.

As used herein, the term "adsorbent material" refers to a material (e.g., adsorbent particles) that can adhere gas molecules within its structure for subsequent use in an application. Specific materials include, but are not limited to, MOF, activated alumina, silica gel, activated carbon, molecular sieve carbon, zeolites (e.g., molecular sieve zeolites), polymers, resins and clays.

As used herein, the term "adsorption capacity" refers to a maximum amount of a chemical species under equilibrium conditions that an adsorbent material can adsorb under a specific temperature and pressure. The units of adsorption capacity, when given in cm³/g, correspond to an amount of the chemical species under standard temperature and pressure (STP) conditions.

Also as used herein, the term "activation" refers to the treatment of adsorption materials (e.g., MOF) in a manner to increase their storage capacity. Typically, the treatment results in removal of contaminants (e.g., water, non-aqueous solvent, sulfur compounds and higher hydrocarbons) from adsorption sites in order to increase the capacity of the materials for their intended purpose.

Also as used herein, the term "particles" when referring to adsorbent materials such as MOF refers to a collection of discrete portions of a material each having a largest dimension ranging from 0.1 µm to 50 mm. The morphology of particles may be crystalline, semi-crystalline, or amorphous. The term "particle" may also encompass powders down to 1 nm in radius. The size ranges disclosed herein can be mean or median size. It is noted also that particles need not be spherical, but may be in a form of cubes, cylinders, discs, or any other suitable shape as would be appreciated by one of ordinary skill in the art.

Also as used herein, the term "monolith" when referring to absorbent materials refers to a single block of the material. The single block can be in the form of, e.g., a brick, a disk or a rod and can contain channels for increased gas flow/distribution. In certain embodiments, multiple monoliths can be arranged together to form a desired shape.

Also as used herein, the term "surface area" refers to an active surface area for the adsorption of chemical species. Unless otherwise specified, "surface area" refers to a Langmuir surface area of the material.

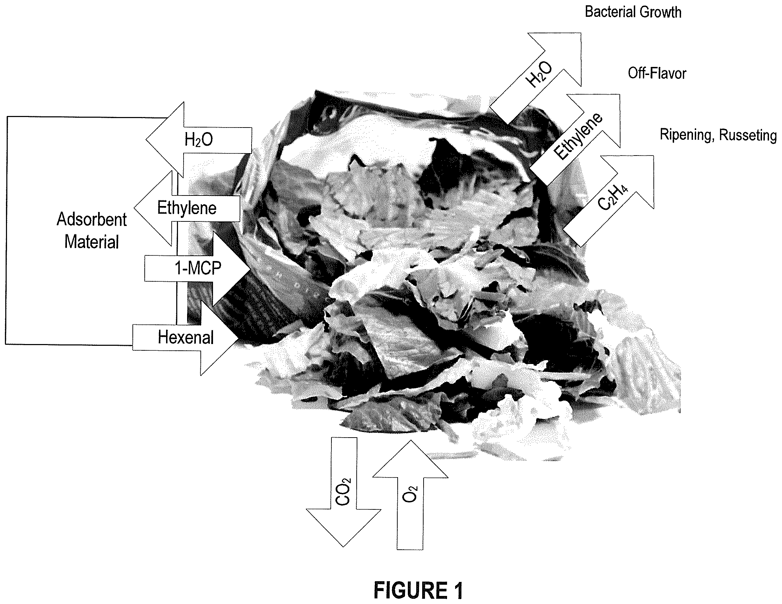

Figure 1 illustrates the flow of chemical species in an illustrative produce container according to an embodiment of the disclosure. As depicted, produce may consume oxygen (O₂) and produce carbon dioxide (CO₂), ethylene (C₂H₄), and water (H₂O) vapors.

In certain embodiments, the adsorbent material (e.g., MOF particles in pellet or powder form) may be contained within a sachet. The adsorbent material may help to control the gas atmosphere and humidity in the container (e.g., packaging) to prevent damage to the produce due to, for example, low levels of O₂ (which may cause anaerobic respiration) or high levels of CO₂. The adsorbent material may adsorb ethylene and other species that may contribute to off-flavor of the produce. In certain embodiments the adsorbent material is adapted to adsorb organic chemical species. In certain embodiments the organic chemical species include volatile organic compounds. In certain embodiments the adsorbent material is adapted to adsorb chemical species including at least one ketone, aldehyde, ester, phenol, quinone, or combinations thereof.

In one aspect of the present disclosure, a food storage system includes a container and an adsorbent. The adsorbent material may be composed of one or more types of adsorbent materials. Table 1 provides data for several exemplary materials that may be utilized as or as part of the adsorbent material in accordance with the embodiments described herein. It is noted that that these materials are for illustrative purposes, and that the embodiments described herein are not limited to these materials.

**Table 1: Exemplary Adsorbent Materials**

| **Material** | **Metal** | **Organic Linker** | **Pore Diameter (Å)** | **Langmuir Surface Area (m²/g)** | **Particle Size (µm)** | **Property** |
|---|---|---|---|---|---|---|
| Basolite™ A520 | Aluminum | Fumaric acid | 11.5 | 1300 | 20-100 | hydrophilic |
| Basosive™ M050 | Magnesium | Formic acid | 3.4 | 1800 | 20-100 | hydrophilic |
| Basolite™ Z1200 | Zinc | 2-Methylimidazole | 7.5 | 500 | 5-80 | hydrophobic |
| Zeolite 13X | AlO₄/SiO₄ | - | 8 | 570 | 1-4 | hydrophilic |
| Basolite™ C300 | Copper | Trimesic acid | two types: 9, 3.5 | 2000 | 20-100 | hydrophilic |

The surface area of the material may be determined by the BET (Brunauer-Emmett-Teller) method according to DIN ISO 9277:2003-05 (which is a revised version of DIN 66131). The specific surface area is determined by a multipoint BET measurement in the relative pressure range from 0.05 - 0.3 *plp*₀*.*

In certain embodiments the adsorbent material has a Langmuir surface area of at least about 500 m²/g. In certain embodiments the Langmuir surface area of the adsorbent material is at least about 700 m²/g. In certain embodiments the Langmuir surface area of the adsorbent material is at least about 900 m²/g. In certain embodiments the Langmuir surface area of the adsorbent material is at least about 1100 m²/g. In certain embodiments the Langmuir surface area of the adsorbent material is at least about 1500 m²/g. In certain embodiments the Langmuir surface area of the adsorbent material is at least about 1700 m²/g. In certain embodiments the Langmuir surface area of the adsorbent material is at least about 2000 m²/g. In certain embodiments the Langmuir surface area of the adsorbent material is at least about 2500 m²/g.

In certain embodiments, an average pore diameter of the adsorbent material is at least about 0.3 nm. In certain embodiments the average pore diameter of the adsorbent material is between about 0.3 nm and about 10 nm. In certain embodiments the average pore diameter of the adsorbent material is between about 0.3 nm and about 2 nm. In certain embodiments the average pore diameter of the adsorbent material is between about 0.3 nm and about 0.7 nm. In certain embodiments the average pore diameter of the adsorbent material is between about 0.9 nm and about 1.5 nm.

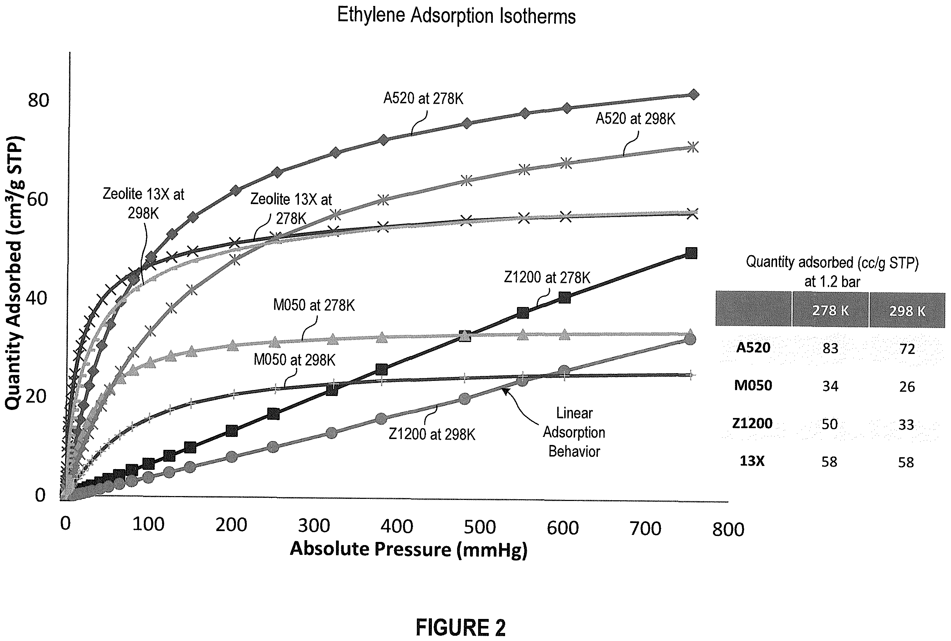

Figure 2 is a plot of ethylene adsorption isotherms for several adsorbent materials (from Table 1) according to an embodiment of the disclosure. In certain embodiments the adsorbent material has a C₂H₄ adsorption capacity of at least about 50 cm³/g when a temperature within the container is within a temperature range and an air pressure within the container is within a pressure range. In certain embodiments the adsorbent material is adapted to maintain a C₂H₄ concentration within the container below about 0.1% when produce is present in the container. In certain embodiments the C₂H₄ concentration within the container is maintained below about 0.1% for at least 5 days after the produce is introduced into the container. In certain embodiments the adsorbent material is adapted to maintain the C₂H₄ concentration within the container below about 0.05% when produce is present in the container. In certain embodiments the C₂H₄ concentration within the container is maintained below about 0.05% for at least 5 days after the produce is introduced into the container.

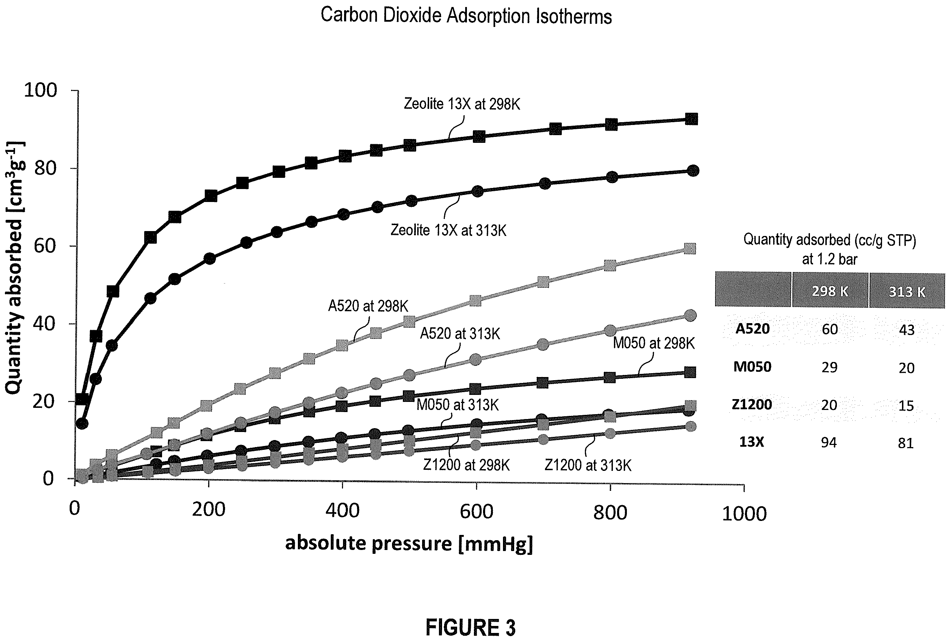

Figure 3 is a plot of carbon dioxide adsorption isotherms for several adsorbent materials (from Table 1) according to an embodiment of the disclosure. In certain embodiments the adsorbent material has a CO₂ adsorption capacity of at least about 40 cm³/g when a temperature within the container is within a temperature range and an air pressure within the container is within a pressure range.

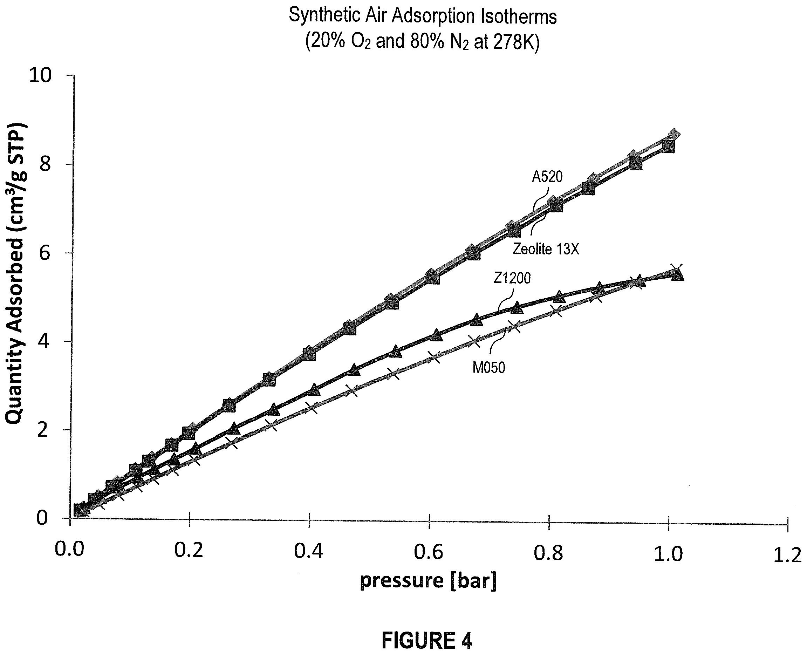

Figure 4 is a plot of oxygen adsorption isotherms for several adsorbent materials (from Table 1) according to an embodiment of the disclosure. In certain embodiments, in a synthetic air environment (e.g., 20% O₂ and 80% N₂) the adsorbent material has an O₂ adsorption capacity of at least about 8 cm³/g when a temperature within the container is within a temperature range and an air pressure within the container is within a pressure range.

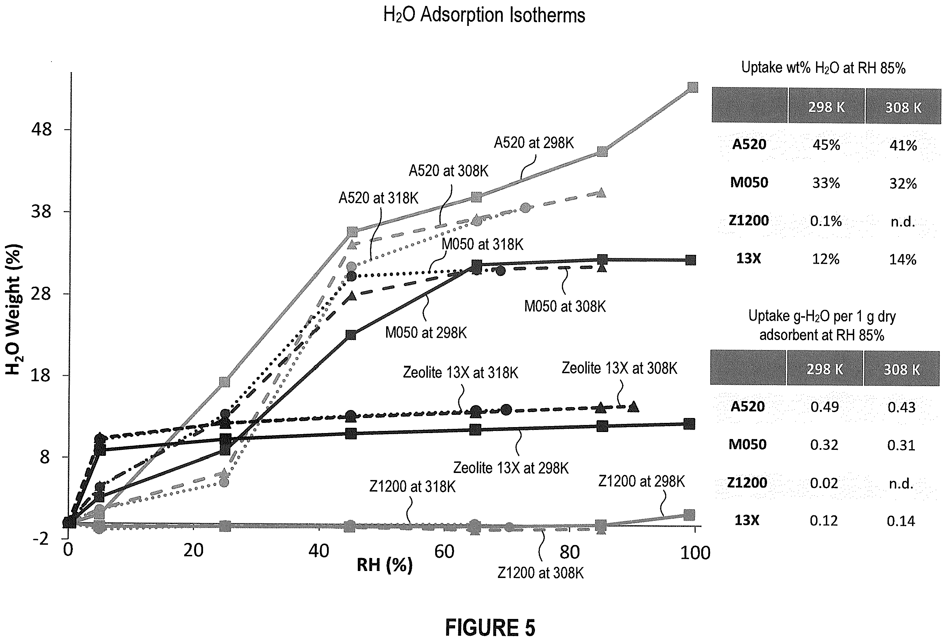

Figure 5 is a plot of water adsorption isotherms for several adsorbent materials (from Table 1) according to an embodiment of the disclosure. In certain embodiments the adsorbent material has an H₂O adsorption capacity that is at least about 15% of a total weight of the adsorbent material when a temperature within the container is within a temperature range and an air pressure within the container is within a pressure range.

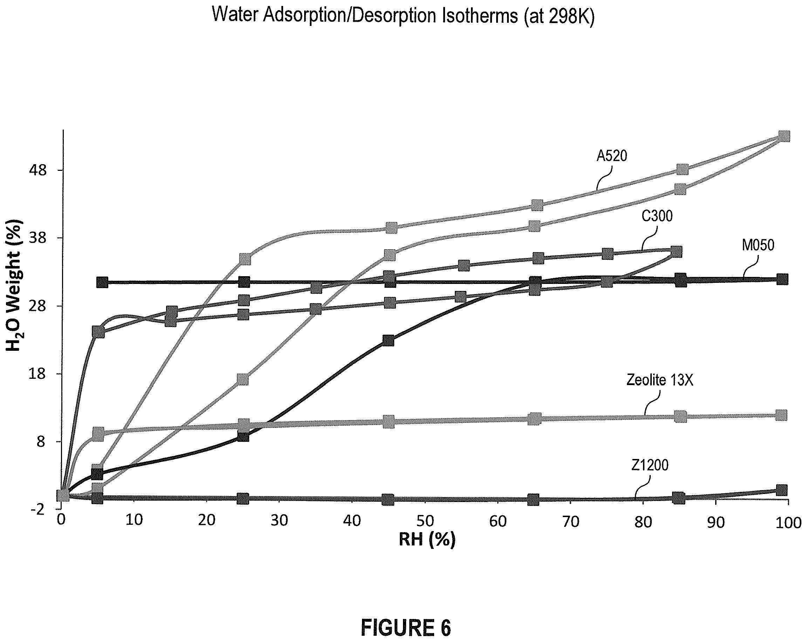

Figure 6 is a plot of water adsorption/desorption behavior for several adsorbent materials (from Table 1) according to an embodiment of the disclosure. In certain embodiments the H₂O adsorption capacity is at least about 15% of the total weight of the adsorbent material when a relative humidity within the container is at least about 75%. In certain embodiments the H₂O adsorption capacity is at least about 15% of the total weight of the adsorbent material when a relative humidity within the container is between about 80% and about 90%. In certain embodiments, the H₂O adsorption capacity is at least about 15% of the total weight of the adsorbent material when a relative humidity within the container is greater than 90%.

In certain embodiments the temperature range is between about 0°C and about 40°C, and wherein the pressure range is between about 500 mmHg and about 1000 mmHg. In certain embodiments the food storage system of claim 13, wherein the pressure range is between about 800 mmHg and about 1000 mmHg. In certain embodiments the temperature range is between about 0°C and about 30°C. In certain embodiments the temperature range is between about 0°C and about 10°C.

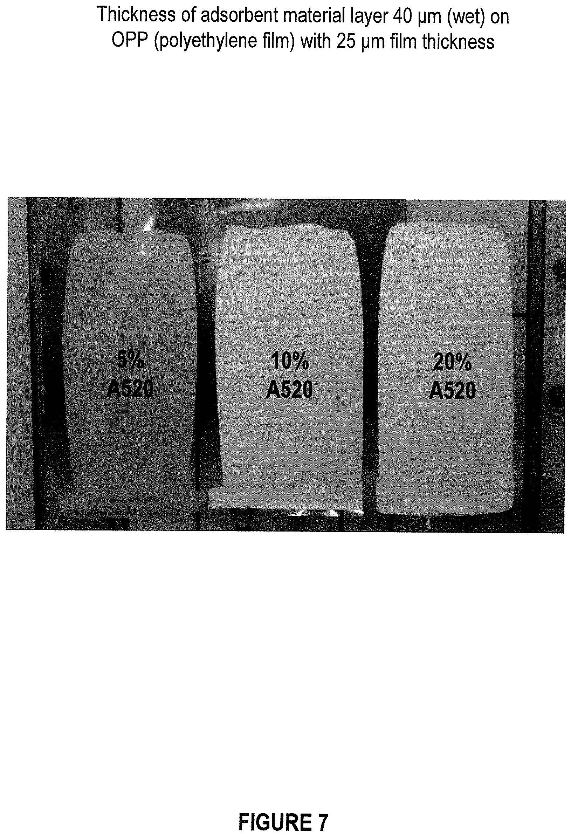

Figure 7 shows different films covered with a film of an adsorbent material printed on a support according to an embodiment of the disclosure. For example, a MOF material (e.g., Basolite™ A520) is shown as a film printed on a surface of an oriented polypropylene (OPP) film, which may be disposed along an interior surface of the container. In certain embodiments the adsorbent material is integrally formed with at least one interior surface of the container. In certain embodiments the adsorbent material is disposed within a multi-layered film. For example, an adsorbent material film may be printed on multiple layers of a multi-layered film.

The film may be disposed within a produce container (e.g., a sealed produce package). In certain embodiments the adsorbent material is disposed within the container. In certain embodiments the container is a sealed produce package. In certain embodiments the sealed produce package includes at least one of polypropylene, polypropylene fibers, polyethylene, polystyrene, polyethylene terephthalate, polyethylene terephthalate fibers, polyester, flash-spun high-density polyethylene fibers, molded fiber, aluminum, nylon polyamide, dressed paperboard, or biodegradable versions thereof. In certain embodiments the container is a shipping container. In certain embodiments the adsorbent material is dispersed within the container (e.g., randomly distributed within the container or on the produce).

In certain embodiments the adsorbent material is disposed within a sachet within the container (e.g., as illustrated in Figure 1). In certain embodiments the sachet is perforated.

In certain embodiments, the adsorbent material can be incorporated into a matrix material and thereafter introduced into a container. The matrix may be a plastic material in any suitable form such as a sheet which can be formed, e.g., by extrusion. The material can be optionally corrugated. The material can be rolled or otherwise manipulated and incorporated into a container. Prior to introduction into a container, the material can be bound by polymer fibers.

The adsorbent material includes at least one of MOF, zeolite, activated carbon, or potassium permanganate.

In certain embodiments the adsorbent material includes MOF wherein the MOF is in a form of a powder, pellets, extrudates, granulates, or a free-standing film. In certain embodiments the MOF is in the form of MOF particles. In certain embodiments the MOF particles have an average particle diameter of at least about 5 micrometers. In certain embodiments the MOF particles have an average particle diameter between about 5 micrometers and about 100 micrometers (see Table 1 for examples).

In certain embodiments the adsorbent material includes a zeolite. In certain embodiments a chemical formula of the zeolite is of a form of M_{*x*/*n*}[(AlO₂)*ₓ*(SiO₂)_{y}]·*m*H₂O, where x, *y, m*, and n are integers greater than or equal to 0, and M is a metal selected from the group consisting of Na and K.

In other embodiments the adsorbent material is a zeolitic material in which the framework structure is composed of YO₂ and X₂O₃, in which Y is a tetravalent element and X is a trivalent element. In one embodiment Y is selected from the group consisting of Si, Sn, Ti, Zr, Ge, and combinations of two or more thereof. In one embodiment Y is selected from the group consisting of Si, Ti, Zr, and combinations of two or more thereof. In one embodiment Y is Si and/or Sn. In one embodiment Y is Si. In one embodiment X is selected from the group consisting of Al, B, In, Ga, and combinations of two or more thereof. In one embodiment X is selected from the group consisting of Al, B, In, and combinations of two or more thereof. In one embodiment X is Al and/or B. In one embodiment X is Al.

In certain embodiments the zeolite is in a form of a powder, particles, pellets, extrudates, granulates, or a free-standing film. In certain embodiments the zeolite is in a form of particles. In certain embodiments the zeolite particles have an average particle diameter of at least about 1 micrometer. In certain embodiments the Langmuir surface area of the zeolite particles is between about 500 m²/g and about 700 m²/g (see Table 1 for an example).

### METAL ORGANIC FRAMEWORK CHEMISTRY

In certain embodiments, the MOF includes a metal selected from the group consisting of Li, Mg, Ca, Sc, Y, Zr, V, Mn, Fe, Co, Ni, Cu, Zn, B, Al, Ti and a combination thereof. In certain embodiments, the MOF includes a metal selected from the group consisting of Al, Mg, Zn, Cu, Zr, and a combination thereof.

In certain embodiments, the bidentate organic linker has at least two atoms which are selected independently from the group consisting of oxygen, sulfur and nitrogen via which an organic compound can coordinate to the metal. These atoms can be part of the skeleton of the organic compound or be functional groups. In certain embodiments, the MOF includes a moiety selected from the group consisting of a phenyl moiety, an imidazole moiety, an alkane moiety, an alkyne moiety, a pyridine moiety, a pyrazole moiety, an oxole moiety, and a combination thereof. In certain embodiments, the MOF includes at least one moiety selected from the group consisting of fumaric acid, formic acid, 2-methylimidazole, and trimesic acid.

As functional groups through which the abovementioned coordinate bonds can be formed, mention may be made by way of example of, in particular: -OH, -SH, -NH₂, -NH(-R-H), -N(R-H)₂, -CH₂OH, -CH₂SH, -CH₂NH₂, -CH₂NH(-R-H), -CH₂N(-R-H)₂, -CO₂H, COSH, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H₂, -AsO₃H, -AsO₄H, -P(SH)₃, -As(SH)₃, -CH(RSH)₂, -C(RSH)₃, -CH(RNH₂)₂, -C(RNH₂)₃, -CH(ROH)₂, -C(ROH)₃, -CH(RCN)₂, or -C(RCN)₃, where R may be, for example, an alkylene group having 1, 2, 3, 4 or 5 carbon atoms, for example a methylene, ethylene, n-propylene, isopropylene, n-butylene, isobutylene, tert-butylene or n-pentylene group, or an aryl group having 1 or 2 aromatic rings, for example 2 C₆ rings, which may, if appropriate, be fused and may, independently of one another, be appropriately substituted by, in each case, at least one substituent and/or may, independently of one another, include, in each case, at least one heteroatom, for example N, O and/or S. In likewise embodiments, mention may be made of functional groups in which the abovementioned radical R is not present. In this regard, mention may be made of, inter alia, -CH(SH)₂, -C(SH)₃, -CH(NH₂)₂, -CH(NH(R-H))₂, -CH(N(R-H)₂)₂, -C(NH(R-H))₃, -C(N(R-H)₂)₃, -C(NH₂)₃, -CH(OH)₂, -C(OH)₃, -CH(CN)₂, -C(CN)₃.

The at least two functional groups can in principle be bound to any suitable organic compound as long as it is ensured that the organic compound including these functional groups is capable of forming the coordinate bond and of producing the framework.

The organic compounds which include the at least two functional groups are derived from a saturated or unsaturated aliphatic compound or an aromatic compound or a both aliphatic and aromatic compound.

The aliphatic compound or the aliphatic part of the both aliphatic and aromatic compound can be linear and/or branched and/or cyclic, with a plurality of rings per compound also being possible. The aliphatic compound or the aliphatic part of the both aliphatic and aromatic compound may include from 1 to 18, 1 to 14, 1 to 13, 1 to 12, 1 to 11, or 1 to 10 carbon atoms, for example 1, 2, 3, 4, 5, 6, 7, 8, 9 or 10 carbon atoms. For example, certain embodiments may include, inter alia, methane, adamantane, acetylene, ethylene or butadiene.

The aromatic compound or the aromatic part of the both aromatic and aliphatic compound can have one or more rings, for example two, three, four or five rings, with the rings being able to be present separately from one another and/or at least two rings being able to be present in fused form. The aromatic compound or the aromatic part of the both aliphatic and aromatic compound may have one, two, or three rings. Furthermore, each ring of the compound can include, independently of one another, at least one heteroatom such as N, O, S, B, P, or Si. The aromatic compound or the aromatic part of the both aromatic and aliphatic compound may include one or two C₆ rings; in the case of two rings, they can be present either separately from one another or in fused form. Aromatic compounds of which particular mention may be made are benzene, naphthalene and/or biphenyl and/or bipyridyl and/or pyridyl.

The at least bidentate organic compound may be derived from a dicarboxylic, tricarboxylic or tetracarboxylic acid or a sulfur analogue thereof. Sulfur analogues are the functional groups -C(=O)SH and its tautomer and -C(=S)SH, which can be used in place of one or more carboxylic acid groups.

For the purposes of the present disclosure, the term "derived" means that the at least bidentate organic compound can be present in partly deprotonated or completely deprotonated form in a MOF subunit or MOF-based material. Furthermore, the at least bidentate organic compound can include further substituents such as -OH, -NH₂, -OCH₃, -CH₃, -NH(CH₃), -N(CH₃)₂, -CN, and halides. In certain embodiments, the at least bidentate organic compound may be an aliphatic or aromatic acyclic or cyclic hydrocarbon which has from 1 to 18 carbon atoms and, in addition, has exclusively at least two carboxy groups as functional groups.

For the purposes of the present disclosure, mention may be made by way of example of dicarboxylic acids, as may be used to realize any of the embodiments disclosed herein, such as oxalic acid, succinic acid, tartaric acid, 1,4-butanedicarboxylic acid, 1,4-butenedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 1,3-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxyolic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octadicarboxylic acid, pentane-3,3-dicarboxylic acid, 4,4'-diamino-1,1'-biphenyl-3,3'-dicarboxylic acid, 4,4'-diaminobiphenyl-3,3'-dicarboxylic acid, benzidine-3,3'-dicarboxylic acid, 1,4-bis(phenylamino)benzene-2,5-dicarboxylic acid, 1,1'-binaphthyldicarboxylic acid, 7-chloro-8-methylquinoline-2,3-dicarboxylic acid, 1-anilinoanthraquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro)phenylpyrazoline-4,5-dicarboxylic acid, 1,4,5,6,7,7-hexachloro-5-norbornene-2,3-dicarboxylic acid, phenylindane-dicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cis-dicarboxylic acid, 2,2'-biquinoline-4,4'-dicarboxylic acid, pyridine-3,4-dicarboxylic acid, 3,6,9-trioxaundecanedicarboxylic acid, hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, (bis(4-aminophenyl) ether)diimidedicarboxylic acid, 4,4'-diaminodiphenylmethanediimidedicarboxylic acid, (bis(4-aminophenyl) sulfone)diimidedicarboxylic acid, 1,4-naphthalenedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenecarboxylic acid, 8-sulfo-2,3-naphthalenedicarboxylic acid, anthracene-2,3-dicarboxylic acid, 2',3'-diphenyl-p-terphenyl-4,4"-dicarboxylic acid, (diphenyl ether)-4,4'-dicarboxylic acid, imidazole-4,5-dicarboxylic acid, 4(1H)-oxothiochromene-2,8-dicarboxylic acid, 5-tert-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptadicarboxylic acid, 5-hydroxy-1,3-benzenedicarboxylic acid, 2,5-dihydroxy-1,4-dicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid or camphordicarboxylic acid, tricarboxylic acids such as 2-hydroxy-1,2,3-propanetricarboxylic acid, 7-chloro-2,3,8-quinolinetricarboxylic acid, 1,2,3-, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid or aurintricarboxylic acid, or tetracarboxylic acids such as 1,1-dioxidoperylo[1,12-BCD]thiophene-3,4,9,10-tetracarboxylic acid, perylenetetracarboxylic acids such as perylene-3,4,9,10-tetracarboxylic acid or (perylene 1,12-sulfone)-3,4,9,10-tetracarboxylic acid, butanetetracarboxylic acids such as 1,2,3,4-butanetetracarboxylic acid or meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid or cyclopentanetetracarboxylic acids such as cyclopentane-1,2,3,4-tetracarboxylic acid.

Certain embodiments may use at least monosubstituted aromatic dicarboxylic, tricarboxylic or tetracarboxylic acids which have one, two, three, four or more rings and in which each of the rings can include at least one heteroatom, with two or more rings being able to include identical or different heteroatoms. For example, certain embodiments may use one-ring dicarboxylic acids, one-ring tricarboxylic acids, one-ring tetracarboxylic acids, two-ring dicarboxylic acids, two-ring tricarboxylic acids, two-ring tetracarboxylic acids, three-ring dicarboxylic acids, three-ring tricarboxylic acids, three-ring tetracarboxylic acids, four-ring dicarboxylic acids, four-ring tricarboxylic acids and/or four-ring tetracarboxylic acids. Suitable heteroatoms are, for example, N, O, S, B, and/or P. Suitable substituents which may be mentioned in this respect are, inter alia, -OH, a nitro group, an amino group or an alkyl or alkoxy group.

In certain embodiments, the linker may include a moiety selected from the group consisting of a phenyl moiety, an imidazole moiety, an alkane moiety, an alkyne moiety, a pyridine moiety, a pyrazole moiety, an oxole moiety and a combination thereof. In a particular embodiment, the linker may be a moiety selected from any of the moieties illustrated in Table 1.

**Table 1: Linker Moieties**

| | |
|---|---|
| Moiety 1 | 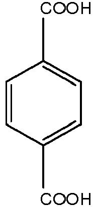 |
| Moiety 2 | 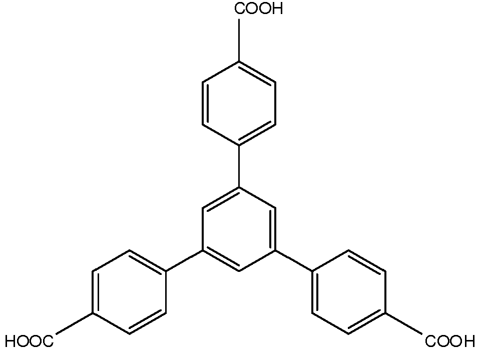 |
| Moiety 3 | 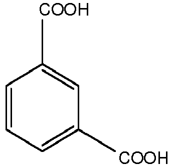 |
| Moiety 4 | 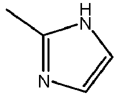 |
| Moiety 5 | 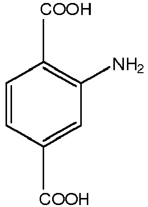 |
| Moiety 6 | 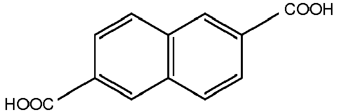 |
| Moiety 7 | 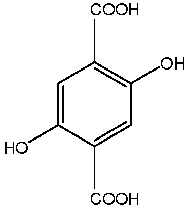 |
| Moiety 8 | 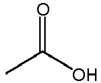 |
| Moiety 9 | 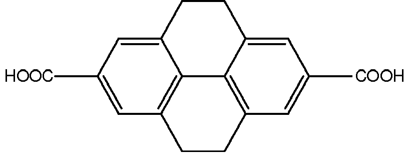 |
| Moiety 10 | 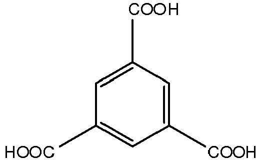 |
| Moiety 11 | 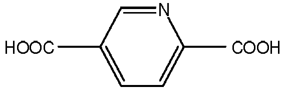 |
| Moiety 12 | 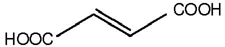 |
| Moiety 13 | 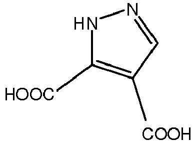 |
| Moiety 14 | 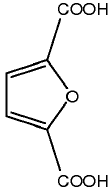 |
| Moiety 15 | 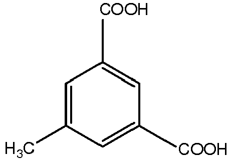 |

The MOF can be in any form, such as, e.g., pellets, extrudates, beads, powders, monoliths, or any other defined or irregular shape. The particles can be any size, e.g., from about .0001 mm to about 10 mm, from about .001 mm to about 5 mm, from about .01 mm to about 3 mm, or from about.1 mm to about 1 mm.

### ACTIVATION OF ADSORBENT MATERIAL

In order to increase capacity of the adsorbent materials utilized in the embodiments of the present disclosure, the adsorbent materials can be activated. The activation may include subjecting the adsorbent material to various conditions including, but not limited to, ambient temperature, vacuum, an inert gas flow, or any combination thereof, for a sufficient time to activate the adsorbent material.

In certain embodiments, the activation includes the removal of water molecules from the adsorption sites. In other embodiments, the activation includes the removal of non-aqueous solvent molecules from the adsorption sites that are residual from the manufacture of the adsorbent material. In still further embodiments, the activation includes the removal of sulfur compounds or higher hydrocarbons from the adsorption sites. In embodiments utilizing an inert gas purge in the activation process, a subsequent solvent recovery step is also contemplated. In certain embodiments, the contaminants (e.g., water, non-aqueous solvents, sulfur compounds or higher hydrocarbons) are removed from the adsorption material at a molecular level.

In a particular embodiment, the activation includes the removal of water molecules from the surface area of the adsorbent material. After activation, the adsorbent material may have a moisture content of less than about 10%, less than about 8%, less than about 5%, less than about 3%, less than about 1%, less than about 0.8%, less than about 0.5%, less than about 0.3% or less than about 0.1% by weight of the adsorbent material. Alternatively, the available surface area of the adsorption material for adsorption of the intended gas is greater than about 80%, greater than about 85%, greater than about 90%, greater than about 95% or greater than about 98% of the accepted value (i.e., the theoretical surface area free of adsorbed contaminants). The surface area of the material may be determined as described earlier.

In certain embodiments, activation can occur before or after the adsorbent material is disposed within a produce container. Activating the adsorbent material outside of the container may be beneficial in certain circumstances as the produce container may have temperature limitations that may impede the activation process. The external process may also result in a shorter activation time due to the ability to apply a higher temperature to the adsorbent material outside of produce container.

Certain embodiments are directed to the activation of adsorbent materials such as MOFs (including MOF particles, composite MOF materials, etc.), zeolites (including zeolite particles, composite zeolite materials, etc.), etc. of the present invention. The adsorbent material can be subject to a suitable temperature for removal of contaminants (e.g., water, non-aqueous solvents, sulfur compounds and higher hydrocarbons) from adsorption sites. The activation may include exposure of the adsorbent material to a temperature, e.g., above about 40°C, above about 60°C, above about 100°C, above about 150°C, above about 250°C, or above about 350°C. In other embodiments, the temperature may be between about 40°C and about 400°C, between about 60°C and about 250°C, between about 100°C and about 200°C, between about 60°C and about 200°C, between about 60°C and about 180°C, between about 60°C and about 170°C, between about 60°C and about 160°C, between about 150°C and about 200°C or between about 150°C and about 180°C.

The activation of the adsorbent material may be subject to a vacuum in order to remove contaminants (e.g., water, non-aqueous solvents, sulfur compounds and higher hydrocarbons) from adsorption sites. The vacuum may be, e.g., from about 10% to about 80% below atmospheric pressure, from about 10% to about 50% below atmospheric pressure, from about 10% to about 20% below atmospheric pressure, from about 20% to about 30% below atmospheric pressure or from about 30% to about 40% below atmospheric pressure.

The activation of the adsorbent material can also include flowing inert gas through the material to remove contaminants (e.g., water, non-aqueous solvents, sulfur compounds and higher hydrocarbons). The inert gas flow can include nitrogen or a noble gas. The total amount of inert gas used in the purge can be any suitable amount to activate the adsorbent material. In a particular embodiment, the amount of gas is at least the volume of a container holding the adsorbent material (e.g., particles). In other embodiments, the amount of gas is at least 2 times the container volume or at least 3 times the container volume. The inert gas can be flowed through the adsorbent material for any suitable time, such as at least about 1 hour, at least about 6 hours, at least about 8 hours, at least about 16 hours, at least about 24 hours or at least about 48 hours. Alternatively, the time can be from about 10 minutes to about 48 hours, from about 10 minutes to about 28 hours, from about 10 minutes to about 16 hours, from about 30 minutes to about 48 hours, from about 30 minutes to about 24 hours, from about 30 minutes to about 16 hours, from about 1 hour to about 48 hours, from about 1 hour to about 24 hours, from about 1 hour to about 16 hours, from about 10 minutes to about 1 hour, from about 30 minutes to about 1 hour, from about 2 hours to about 24 hours, or from about 4 hours to about 16 hours. In some embodiments, the time can be from at least about 5 minutes.

Any amount of adsorbent material (e.g., MOF particles) disclosed herein may be activated according to the methods described herein. In a particular embodiment, the adsorbent material may be in an amount of at least about 1 g, at least about 500 g, from about 20 g to about 500 g, from about 50 g to about 300 g, from about 100 g to about 200 g, or greater than 500 g.

In another embodiment, the adsorbent material may be in an amount of at least about 1 kg, at least about 500 kg, from about 20 kg to about 500 kg, from about 50 kg to about 300 kg or from about 100 kg to about 200 kg.

The time period for the activation of the adsorbent material can be determined by measuring the flow of water or non-aqueous solvent in a vacuum. In a certain embodiment, the flow is terminated when the water or solvent content is less than about 10%, less than about 8%, less than about 5%, less than about 3%, less than about 1%, less than about 0.8%, less than about 0.5%, less than about 0.3% or less than about 0.1% by weight of the adsorbent material.

Any suitable means for activating the adsorbent material is compatible with the composite materials and structures described herein. For example, particles may be activated prior to forming a composite material, in situ while the composite material is formed, or after forming the composite material.

In some embodiments it may be necessary at a point in time after the initial activation to reactivate the adsorbent material. The reactivation can include subjecting the adsorbent material to heat, vacuum and/or inert gas flow for a sufficient time for reactivation. The reactivation can also include washing and/or extraction of the adsorbent material with non-aqueous solvent or water.

The time period for the activation or reactivation of the adsorbent material can be determined by measuring the flow of water or non-aqueous solvent in a vacuum. In a certain embodiment, the flow is terminated when the water or solvent content is less than about 10%, less than about 8%, less than about 5%, less than about 3%, less than about 1%, less than about 1%, less than about 0.8%, less than about 0.5%, less than about 0.3% or less than about 0.1% by weight of the adsorbent material.

When the adsorbent material is activated outside of the container, it may be necessary to store and/or ship the adsorbent material prior to incorporation into an adsorption container. In certain embodiments, the activated adsorbent material is stored in a plastic receptacle with an optional barrier layer between the receptacle and the adsorbent material. The barrier layer may include, e.g., one or more plastic layers.

When the adsorbent material is activated by an inert gas flow, the flow may be initiated at an inlet of the container and may be terminated at an outlet of the container at a different location than the inlet. In alternative embodiments, the inert gas flow is initiated and terminated at the same location on the container.

The inert gas flow may include the utilization of a single tube for introducing and removing the inert gas from the container. In such an embodiment, the tube may include an outer section with at least one opening to allow the inert gas to enter the container and an inner section without openings to allow for the inert gas to be removed from the container. In other embodiments, the flow may include the utilization of a first tube for introducing the inert gas into the container and a second tube to remove the inert gas from the container.

Disclosure herein is also contemplated to be applicable to other adsorbent materials such as activated alumina, silica gel, activated carbon, molecular sieve carbon, zeolites (e.g., molecular sieve zeolites), polymers, resins, and clays.

Also, disclosure herein with respect to adsorbent material is also contemplated to be applicable to monoliths of the material where applicable.

### COMPOSITE MOF MATERIALS

Composite MOF materials, as described herein, may be any structure made from at least two distinct materials, one of which being a MOF. The structures may be in the form of, but not limited to, a particle, film, layer, gel (including hydrogels and aerogels), cross-linked (including chemically or physically cross-linked) material, or any suitable combination thereof. Each structure may have a suitable morphology, including, but not limited to, a homogeneous mixture, a lamellar structure, a core-shell structure, a graduated material structure, spherical or non-spherical particles embedded within a matrix, fibers or rods embedded within a matrix, woven or non-woven fiber fabric, and interpenetrating network.

In certain embodiments the adsorbent material is a composite material including a MOF material and a non-MOF material. In certain embodiments a ratio of a mass of the MOF material to a total mass of the adsorbent material is greater than 0.5. In certain embodiments the non-MOF material is a material selected from the group consisting of a biodegradable polymer, a non-biodegradable polymer, a zeolite, and combinations thereof. In certain embodiments a morphology of the adsorbent material is selected from the group consisting of a homogenous mixture, a lamellar structure, a core-shell structure, a graduated material structure, spherical or non-spherical particles embedded within a matrix, fibers or rods embedded within a matrix, woven or non-woven fiber fabric, and interpenetrating network. In certain embodiments the morphology of the adsorbent material is a lamellar structure, wherein one or more layers of the MOF material are separated by one or more layers of the non-MOF material.

Non-limiting examples of certain embodiments include particles having a homogeneous mixture morphology based on at least a MOF and a non-MOF material, particles having a lamellar structure morphology based on at least a MOF and a non-MOF material (e.g., alternating layers of the MOF and non-MOF material), particles having a core-shell structure morphology based on at least a MOF and a non-MOF material (e.g., with the non-MOF material as the core and the MOF as the shell, or with the non-MOF material as the shell and the MOF as the core), particles having a graduated material morphology based on at least a MOF and a non-MOF material (e.g., with concentrations of one or more of the MOF or non-MOF material varying throughout), particles having a matrix morphology with spherical or non-spherical particles embedded within the matrix based on at least a MOF and a non-MOF material (e.g., with the non-MOF material as the matrix and the MOF as the embedded particles, or with the non-MOF material as the embedded particles and the MOF as the matrix), particles having a matrix morphology with fibers or rods embedded within the matrix based on at least a MOF and a non-MOF material (e.g., with the non-MOF material as the matrix and the MOF as the embedded fibers or rods, or with the non-MOF material as the embedded fibers or rods and the MOF as the matrix), particles having a woven or non-woven fabric morphology based on at least a MOF and a non-MOF material (e.g., MOF woven or non-woven with the non-MOF material), and particles having an interpenetrating network morphology based on at least a MOF and a non-MOF material (e.g., a cross-linked or non-crosslinked non-MOF material matrix interpenetrating with a cross-linked or non-cross-linked MOF matrix), or any suitable combination thereof.

Additional non-limiting examples of certain embodiments include films having a homogeneous mixture morphology based on at least a MOF and a non-MOF material, films having a lamellar structure morphology based on at least a MOF and a non-MOF material (e.g., alternating layers of the MOF and non-MOF material), films embedded with particles having core-shell structure morphologies based on at least a MOF and a non-MOF material (e.g., with the non-MOF material as the core and the MOF as the shell, or with the non-MOF material as the shell and the MOF as the core), films having a graduated material morphology based on at least a MOF and a non-MOF material (e.g., with concentrations of one or more of the MOF or non-MOF material varying throughout), films having a matrix morphology with spherical or non-spherical particles embedded within the matrix based on at least a MOF and a non-MOF material (e.g., with the non-MOF material as the matrix and the MOF as the embedded particles, or with the non-MOF material as the embedded particles and the MOF as the matrix), films having a matrix morphology with fibers or rods embedded within the matrix based on at least a MOF and a non-MOF material (e.g., with the non-MOF material as the matrix and the MOF as the embedded fibers or rods, or with the non-MOF material as the embedded fibers or rods and the MOF as the matrix), films having a woven or non-woven fabric morphology based on at least a MOF and a non-MOF material (e.g., MOF woven or non-woven with the non-MOF material), and films having an interpenetrating network morphology based on at least a MOF and a non-MOF material (e.g., a cross-linked or non-crosslinked non-MOF material matrix interpenetrating with a cross-linked or non-cross-linked MOF matrix), or any suitable combination thereof.

Additional non-limiting examples of certain embodiments include layers having a homogeneous mixture morphology based on at least a MOF and a non-MOF material, layers having a lamellar structure morphology based on at least a MOF and a non-MOF material (e.g., alternating layers of the MOF and non-MOF material), layers embedded with particles having core-shell structure morphologies based on at least a MOF and a non-MOF material (e.g., with the non-MOF material as the core and the MOF as the shell, or with the non-MOF material as the shell and the MOF as the core), layers having a graduated material morphology based on at least a MOF and a non-MOF material (e.g., with concentrations of one or more of the MOF or non-MOF material varying throughout), layers having a matrix morphology with spherical or non-spherical particles embedded within the matrix based on at least a MOF and a non-MOF material (e.g., with the non-MOF material as the matrix and the MOF as the embedded particles, or with the non-MOF material as the embedded particles and the MOF as the matrix), layers having a matrix morphology with fibers or rods embedded within the matrix based on at least a MOF and a non-MOF material (e.g., with the non-MOF material as the matrix and the MOF as the embedded fibers or rods, or with the non-MOF material as the embedded fibers or rods and the MOF as the matrix), layers having a woven or non-woven fabric morphology based on at least a MOF and a non-MOF material (e.g., MOF woven or non-woven with the non-MOF material), and layers having an interpenetrating network morphology based on at least a MOF and a non-MOF material (e.g., a cross-linked or non-crosslinked non-MOF material matrix interpenetrating with a cross-linked or non-cross-linked MOF matrix), or any suitable combination thereof.

Additional non-limiting examples of certain embodiments include gels having a homogeneous mixture morphology based on at least a MOF and a non-MOF material, gels having a lamellar structure morphology based on at least a MOF and a non-MOF material (e.g., alternating gels of the MOF and non-MOF material), gels having core-shell structure morphologies based on at least a MOF and a non-MOF material (e.g., with the non-MOF material as the core and the MOF as the shell, or with the non-MOF material as the shell and the MOF as the core), gels having a graduated material morphology based on at least a MOF and a non-MOF material (e.g., with concentrations of one or more of the MOF or non-MOF material varying throughout), gels having a matrix morphology with spherical or non-spherical particles embedded within the matrix based on at least a MOF and a non-MOF material (e.g., with the non-MOF material as the matrix and the MOF as the embedded particles, or with the non-MOF material as the embedded particles and the MOF as the matrix), gels having a matrix morphology with fibers or rods embedded within the matrix based on at least a MOF and a non-MOF material (e.g., with the non-MOF material as the matrix and the MOF as the embedded fibers or rods, or with the non-MOF material as the embedded fibers or rods and the MOF as the matrix), gels having a woven or non-woven fabric morphology based on at least a MOF and a non-MOF material (e.g., MOF woven or non-woven with the non-MOF material), and gels having an interpenetrating network morphology based on at least a MOF and a non-MOF material (e.g., a cross-linked or non-crosslinked non-MOF material matrix interpenetrating with a cross-linked or non-cross-linked MOF matrix), or any suitable combination thereof.

Additional non-limiting examples of certain embodiments include cross-linked materials having a homogeneous mixture morphology based on at least a MOF and a non-MOF material, gels having a lamellar structure morphology based on at least a MOF and a non-MOF material (e.g., alternating gels of the MOF and non-MOF material in which the layers are cross-linked together), cross-linked materials having core-shell structure morphologies based on at least a MOF and a non-MOF material (e.g., with the non-MOF material as the core and the MOF as the shell, or with the non-MOF material as the shell and the MOF as the core), cross-linked materials having a graduated material morphology based on at least a MOF and a non-MOF material (e.g., with concentrations of one or more of the MOF or non-MOF material varying throughout), cross-linked materials having a matrix morphology with spherical or non-spherical particles embedded within the matrix based on at least a MOF and a non-MOF material (e.g., with the non-MOF material as the matrix and the MOF as the embedded particles, or with the non-MOF material as the embedded particles and the MOF as the matrix), cross-linked materials having a matrix morphology with fibers or rods embedded within the matrix based on at least a MOF and a non-MOF material (e.g., with the non-MOF material as the matrix and the MOF as the embedded fibers or rods, or with the non-MOF material as the embedded fibers or rods and the MOF as the matrix), cross-linked materials having a woven or non-woven fabric morphology based on at least a MOF and a non-MOF material (e.g., MOF woven or non-woven with the non-MOF material), and cross-linked materials having an interpenetrating network morphology based on at least a MOF and a non-MOF material (e.g., a cross-linked or non-crosslinked non-MOF material matrix interpenetrating with a cross-linked or non-cross-linked MOF matrix), or any suitable combination thereof.

### SHELF LIFE EVALUATION

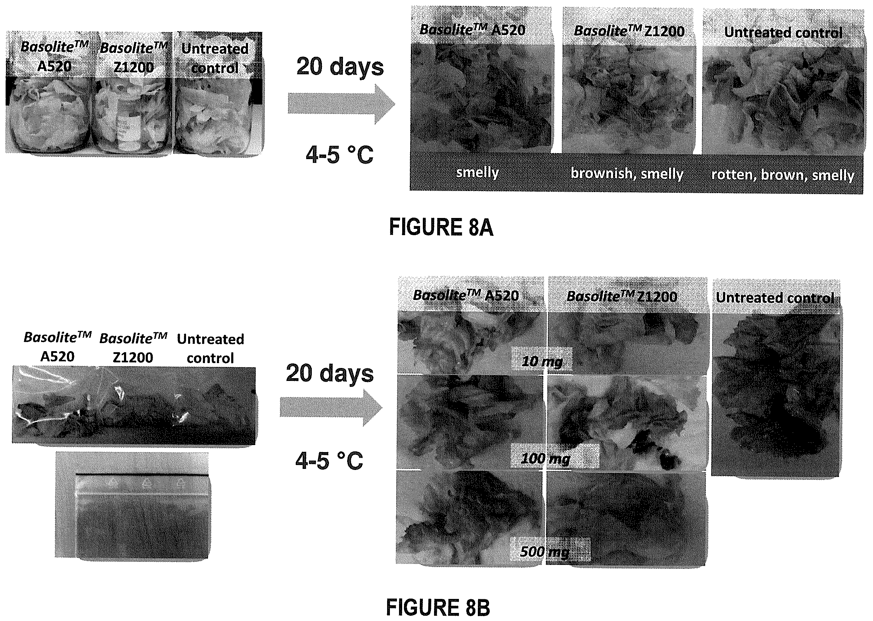

Figure 8A shows results of shelf life tests of iceberg lettuce with adsorbent materials in glass vessels according to an embodiment of the disclosure. The glass vessels each contained about 90 g of iceberg lettuce and contained MOFs (100 mg) of different compositions/morphologies (A520 and Z1200 of Table 1), which were compared to an untreated control (no MOFs/adsorbent material). The MOF treated lettuce demonstrated improved shelf life over the control after incubating for 20 days between 4-5°C.

Figure 8B shows results of shelf life tests of iceberg lettuce with adsorbent materials in a sealed polyethylene bags according to an embodiment of the disclosure. Each bag was sealed and contained 30 g of iceberg lettuce, with different MOFs (A520 and Z1200) in 10 mg, 100 mg, and 500 mg amounts. Similar conditions described above with respect to Figure 8A were applied to each of the samples and compared to an untreated control. Each sample containing 500 mg of MOF particles resulted in the most improvement in shelf life.

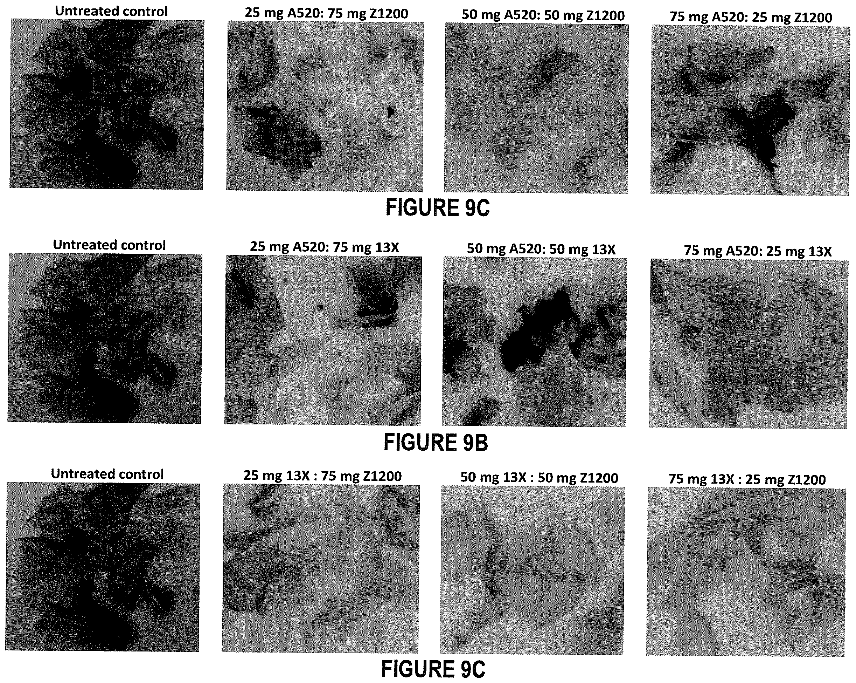

Figures 9A-9C shows results of shelf life tests of iceberg lettuce with different mixtures of adsorbent materials according to an embodiment of the disclosure. The tests were performed in sealed polyethylene bags with similar incubation conditions as described above. Different mixtures of adsorbent materials were used to treat the samples. Of the mixtures of A520 and Z1200 (see Figure 9A), the mixture having a 1:1 ratio of A520 to Z1200 (50 mg of A520 and 50 mg of Z1200) appeared to produce the best results. Of the mixtures of A520 and zeolite 13X (see Figure 9B), the mixture having a 3:1 ratio of A520 and zeolite 13X (75 mg of A520 and 25 mg of zeolite 13X) appeared to produce the best results. Of the mixtures of zeolite 13X and Z1200 (see Figure 9C), none of the mixtures appeared to show improvement over each other but produced better results than the untreated control.

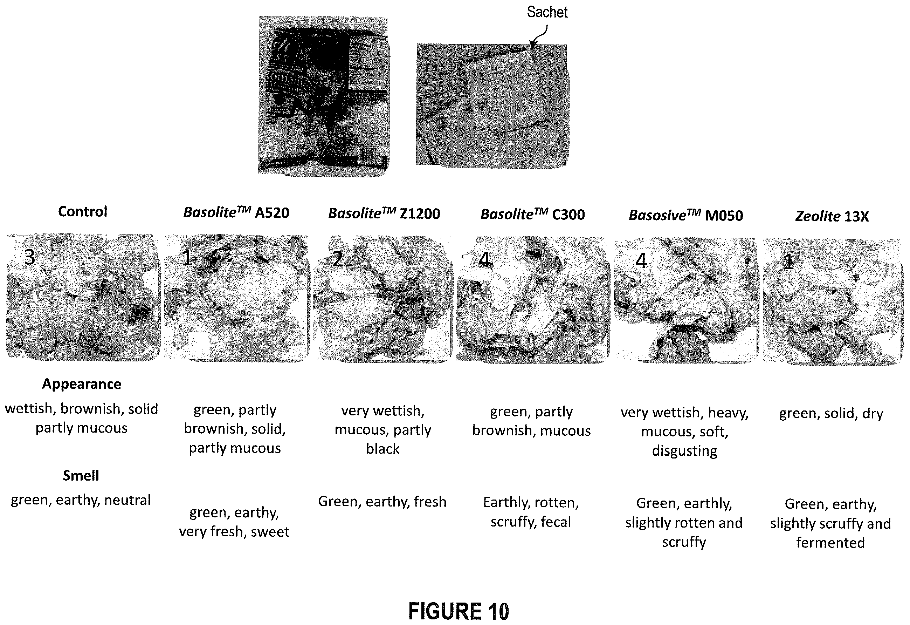

Figure 10 shows results of shelf life tests of iceberg lettuce for different types of adsorbent materials within standard packaging materials according to an embodiment of the disclosure. Each adsorbent material was placed in a sachet containing 500 mg of adsorbent material. The sachets were each placed in standard packages containing 150 g of iceberg lettuce, and incubated at 4-5°C for 17 days. A520 and zeolite 13X appeared to result in the best shelf life enhancement.

### ADSORBENT CONTAINERS AND SUPPORTS

In certain embodiments, the adsorbent material is contained in a sachet. In certain embodiments, a sachet may be a free-form sachet, sealed, adhered, or incorporated into a multi-layer film as part of a package or lid (e.g., heat-staked or permanently bonded into a hard shell container or bag film). In certain embodiments, the sachet may be made from a biodegradable material (e.g., ecoflex® compostable polymer). In certain embodiments, the sachet may be made from a dry-Teflon® (polytetrafluoroethylene) film. Suitable adhesives for adhering sachet materials together to form a sachet may include, for example, Acronal® acrylic binder.

The sachet may have one of a variety of shapes, including square, rectangular, hexagonal, triangular, etc., and may range in size (e.g., length/width) from 0.25 inches to 12 inches in some embodiments. In some embodiments, the sachet may have a warning label printed thereon (e.g., a warning not to eat or inhale the contents).

In some embodiments, the sachet may include perforations that are arranged to manage mass transfer of various gases into and out of the sachet to maximize the adsorption profile of the adsorbent material contained therein. In some embodiments, the perforations may be present from 5 needles/cm² to 10 needles/cm² (e.g., 8 needles/cm²), from 20 needles/cm² to 40 needles/cm² (e.g., 30 needles/cm²), or from 50 needles/cm² to 70 needles/cm² (e.g., 63 needles/cm²).

Exemplary sachets are now described. A first batch ("Batch 1") of sachets was prepared, as shown in Figure 11A, with each sachet containing 0.84 g to 0.95 g of adsorbent per sachet Basolite™ A520 adsorbent powder per sachet. A second batch ("Batch 2") of sachets was also prepared, as shown in Figure 11B, with each sachet containing 0.91 g to 0.99 g of Basolite™ A520 adsorbent powder per sachet. Some of the sachets of Batch 1 and Batch 2 were used as prepared, while others were activated at 100°C under vacuum for 10 hours.

Figure 12 is a plot of H₂O uptake kinetics for Batches 1 and 2 at RH 97% and room temperature. H₂O uptake was calculated based on a total weight of the sachets plus adsorbent contained therein or based on a total weight of the adsorbent alone. Batch 1 demonstrated similar uptake before and after activation, while Batch 2 demonstrated a significant difference in uptake before and after activation.

**Table 2: H₂O uptake for different sachet batches**

| | **As Prepared** | | **Activated** | |
|---|---|---|---|---|
| **Sample** | **wt% (of sachet + MOF)** | **wt% (of MOF only)** | **wt% (of sachet + MOF)** | **wt% (of MOF only)** |
| Batch 1 | 31 | 78 | 32 | 78 |
| Batch 2 | 29 | 57 | 44 | 77 |

In certain embodiments, the adsorbent material may be incorporated into a film (e.g., a solid-state fibrillated film (SSFF)), such as a dry-Teflon® film. The film may be utilized as an insert, or may be protected by other films or food-approved substrates. In some embodiments, the film may be a free-standing film, sealed, adhered to a package, container, or lid surface, or disposed within a multi-layer film. In some embodiments, the film may be a cast film or a blown film.

Figure 13 shows an example adsorbent film system 1300 for incorporation into a produce package or container according to an embodiment of the disclosure. The system 1300 includes an adsorbent film 1302 (e.g., a MOF-Teflon film) encapsulated within a protective film 1304. In some embodiments, the protective film is a biaxially-oriented polypropylene (BOPP) film. The adsorbent film 1302 and the protective film 1304 may together be adhered to a release liner 1306 via an adhesive 1306. In some embodiments, the adhesive is an acrylic binder (e.g., Acronal® acrylic binder), or any other suitable adhesive. In some embodiments, the release liner includes one or more of BOPP, biaxially-oriented polyethylene terephthalate (BOPET), silicon paper, or any other suitable material. In certain embodiments, the adsorbent film may be packaged between the protective film 1304 and the release liner that 1306 such that, when removed, adsorbent film 1302 and protective layer 1304 may be be applied to an interior surface of a package material or container via the adhesive 1304. In certain embodiments, the release liner 1306 and protective layer 1304 may contain perforations or a temporary protective layer using water sensitive melt film (i.e. EVOH). Film perforations may be arranged to manage mass transfer of moisture and various gases to maximize the adsorption profile of the adsorbent. In some embodiments, the perforations may be present from 5 needles/cm² to 10 needles/cm² (e.g., 8 needles/cm²), from 20 needles/cm² to 40 needles/cm² (e.g., 30 needles/cm²), or from 50 needles/cm² to 70 needles/cm² (e.g., 63 needles/cm²).

In some embodiments, an adsorbent film thickness ranges from 1 µm to 1000 µm, from 250 µm to 750 µm, or from 400 µm to 6000 µm (e.g., 500 µm). In some embodiments, length and width of the adsorbent film may each independently range from less than 1 inch to up to 12 inches. A total weight of adsorbent (e.g., MOF) within the adsorbent film may range from 0.1 g up to 1 kg.

Figure 14 is a plot of H₂O uptake kinetics for adsorbent films prepared according to embodiments of the disclosure to evaluate the performance of a BOPP protective layer. The upper plot corresponds to an A520 Teflon film in an activated (i.e., non-solvated) form integrated into sealed package, while the lower plot corresponds to an A520 Teflon film sealed by a BOPP protective layer. A water vapor transmission rate of the BOPP film was determined to range from 0.6 g/(m²d) to 1.7 g/(m²d) at 23°C, 85%RH. In some embodiments, a water uptake ranged from 5 wt% to 10 wt% at about 14 days.

Figure 15 is a plot of water adsorption/desorption isotherms comparing the uptake of an A520 free-standing film (surface area of 1297 m²/g) to an A520 powder (surface area of 1200 m²/g). In some embodiments, an average surface area of the free-standing film is greater than 1200 m²/g, or ranges from 1200 m²/g to 1400 m²/g. Figure 16 is a plot of water uptake kinetics comparing the uptake of an A520 free-standing film (A520 at 90 wt%, surface area of 1069 m²/g), a structured A520 free-standing film (A520 at 90 wt%, surface area of 1062 m²/g), and an A520 powder (surface area of 1200 m²/g).

Figure 17 is a plot of water uptake kinetics for films with protective layers having different degrees of perforation prepared according to embodiments of the disclosure. The perforation densities used were 8 needles/cm², 30 needles/cm², and 63 needles/cm². The film with the protective layer having 8 needles/cm² perforations demonstrated a lower and slower water uptake than films with protective layers having higher degrees of perforation. The films with protective layers having 30 needles/cm² and 63 needles/cm² show little difference in the first day, but then saturate to a similar capacity as an A520 teflon film with no protective layer.

In certain embodiments, MOF may be incorporated into an ink or coating (e.g., a printed ink). In certain embodiments, the ink or coating may include, for example, one or more binder formulations, one or more dispersants, or additional components (e.g., surfactants, such as sugar-based surfactants). Examples of binders include aqueous binder formulations, polyvinylidene fluoride (PVDF) binder formulations (e.g., 20% wet on OPP and low-density polyethylene (LDPE)), and Joncryl® based binders.

In certain embodiments, a thickness of the coating may range from 0.01 micrometers to 50 micrometers. In certain embodiments, a surface area of the coating may range from 300 m²/g to 700 m²/g (e.g., 520 m²/g).

In some embodiments, the film or ink may be present in a package or container at an amount from 0.1 gram to 2 grams.

In some embodiments, the coating may be a UV-curable coating. For example, MOF could be mixed with polymers (oligomers) and photoinitiators to be applied under an ultraviolet (UV) lamp to provide a rapid curing of the coating. An example of a UV curable coating composition would include A520 MOF (at 1% concentration) mixed with acrylic monomers and N-vinyl compounds (e.g., N-Vinyl caprolactam).

In some embodiments, adsorbent (e.g., MOF) particles may be present as a uniform distribution within the coating or ink. In some embodiments, the adsorbent particles may be distributed in a non-uniform fashion with a gradient of large particles to small particles (e.g., from one surface of the film to another surface of the film). A gradient distribution may be prepared, for example, by applying different sized particles using a multi-layer deposition process.

Figure 18 is a plot of a water adsorption isotherm comparing a MOF powder to a MOF coating prepared according to an embodiment of the disclosure. The powder corresponds to A520 powder having a surface area of 1200 m²/g, and the coating corresponds to an A520 printed coating (e.g., 20 wt% wet, 65 wt% dry) on OPP.

In some embodiments, an adsorbent film may be a co-extruded film, such as a MOF co-extruded film, prepared according to a compounding process (e.g., by direct addition, such as pre-mixed or separate feeds, to a final concentration, or via masterbatch). In some embodiments, a masterbatch may contain from 0.1 wt% to 20 wt% MOF infused with a polymer. Suitable polymers may include, but are not limited to, PP, OPP, PE, LDPE (e.g., Riblene FF29), polyvinyl chloride, polycarbonate, polyeurothene, polyamide, polyester, polystyrene, polyurethane, PMMA, chlorinated polymers, halogenated polymers, silicon-based polymers, compostable polymers, and co-polymers and combinations thereof. In some embodiments, one or more co-additives may be included, including, but not limited to, antioxidants, heat stabilizers, light stabilizers, fillers, colorants, fibers, processing aids, nucleating agents, conductive and antistatic agents, compatibilizers, dispersing aids, acid scavengers, flame retardants, crosslinking agents, oxo-degrading agents, and combinations thereof. A MOF co-extruded film may be produced from the masterbatch by compounding with additional polymer (e.g., LDPE) on a single or twin screw extruder. Other forms of an adsorbent material or film include continuous shapes such as, for example, cast films (e.g., possibly followed by compression forming or vacuum forming), oriented films (e.g., mono-oriented, bi-oriented), blown films, fibrous films (e.g., woven and non-woven fabrics), and forms produced by grinding (e.g., room temperature grinding, low temperature (cryo) grinding) for subsequent fabrication (e.g., of sintered plates or of wire coating by a fluidized bed process). Other forms of the adsorbent material or film include non-continuous shapes such as, for example, injection molded or blow molded materials/films.

In the foregoing description, numerous specific details are set forth, such as specific materials, dimensions, processes parameters, etc., to provide a thorough understanding of the embodiments of the present disclosure. The particular features, structures, materials, or characteristics may be combined in any suitable manner in one or more embodiments. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form.

Reference throughout this specification to "an embodiment", "certain embodiments", or "one embodiment" means that a particular feature, structure, or characteristic described in connection with the embodiment is included in at least one embodiment. Thus, the appearances of the phrase "an embodiment", "certain embodiments", or "one embodiment" in various places throughout this specification are not necessarily all referring to the same embodiment, and such references mean "at least one".

## Claims

1. A food storage system comprising:
a container; and
an adsorbent material, wherein:
a Langmuir surface area of the adsorbent material is at least about 500 m²/g, and an average pore diameter of the adsorbent material is at least about 0.3 nm wherein the adsorbent material comprises at least one of a metal organic framework (MOF), a zeolite, activated carbon, or potassium permanganate, and
wherein the MOF is in a form of a powder, particles, pellets, extrudates, granulates, or a free-standing film.

2. The food storage system of claim 1, wherein the Langmuir surface area of the adsorbent material is at least about 700 m²/g and wherein the average pore diameter of the adsorbent material is between about 0.3 nm and about 10 nm.

3. The food storage system of claim 2, wherein the MOF particles have an average particle diameter of at least about 5 micrometers.

4. The food storage system of claim 1 or 3, wherein the MOF particles comprise a metal selected from the group consisting of Li, Mg, Ca, Sc, Y, Zr, V, Mn, Fe, Cu, Zn, B, Al, and a combination thereof, preferably wherein the MOF particles comprise a metal selected from the group consisting of Al, Mg, Zn, Cu, Zr, and a combination thereof.

5. The food storage system of any of claims 1 to 3, wherein the MOF particles comprise a moiety selected from the group consisting of a phenyl moiety, an alkane moiety, an alkyne moiety, an imidazole moiety, a pyridine moiety, a pyrazole moiety, an oxole moiety, and a combination thereof or wherein the MOF particles comprise at least one moiety selected from the group consisting of fumaric acid, formic acid, 2-methylimidazole, and trimesic acid.

6. The food storage system of any of claims 1 to 5, wherein the adsorbent material comprises a zeolite wherein preferably a chemical formula of the zeolite is of a form of M_{*x*/*n*}[(AlO₂)*ₓ*(SiO₂)*_{y}*]·*m*H₂O, where *x, y, m*, and *n* are integers greater than or equal to 0, and M is a metal selected from the group consisting of Na, K, B, Fe, and Cu and/or wherein the adsorbent material comprises a zeolitic material having a framework structure comprising YO₂ and X₂O₃, wherein:
Y is a tetravalent element,
X is a trivalent element,
Y is selected from the group consisting of Si, Sn, Ti, Zr, Ge, and combinations of two or more thereof, and
X is selected from the group consisting of Al, B, In, Ga, and combinations of two or more thereof.

7. The food storage system of any of claims 1-6, wherein the adsorbent material is a composite material comprising a MOF material and a non-MOF material, preferably wherein
the ratio of a mass of the MOF material to a total mass of the adsorbent material is greater than 0.5.

8. The food storage system of any of claims 1-7, wherein the adsorbent material comprises a first adsorbent composition and a second adsorbent composition.

9. The food storage system of claim 8, wherein the first adsorbent composition comprises a first plurality of MOF particles comprising aluminum and fumaric acid, and wherein the second adsorbent composition comprises a second plurality of MOF particles comprising zinc and 2-methylimidazole, wherein preferably the mass ratio of the first adsorbent composition to the second adsorbent composition is at least about 1 or at least about 3.

10. The food storage system of any of claims 1-7, wherein the first adsorbent composition comprises a first plurality of MOF particles comprising aluminum and fumaric acid, and wherein the second adsorbent composition comprises a second plurality of zeolite particles comprising aluminum oxide and silicon oxide wherein preferably the a mass ratio of the first adsorbent composition to the second adsorbent composition is at least about 3.

11. The food storage system of any of claims 1-10, wherein the adsorbent material is disposed within a sachet within the container.

12. A food storage system comprising:
a container;
a plurality of MOF particles dispersed within the container; and
further comprising a produce disposed within the container.

13. A method for extending a shelf life of a produce, the method comprising:
dispersing a plurality of MOF particles within a container;
placing the produce within the container; and
sealing the container.

## Patentansprüche

1. Nahrungsmittelaufbewahrungssystem, umfassend:
einen Behälter und
ein adsorbierendes Material, wobei:
eine Langmuir-Oberfläche des adsorbierenden Materials mindestens etwa 500 m²/g beträgt und ein durchschnittlicher Porendurchmesser des adsorbierenden Materials mindestens etwa 0,3 nm beträgt, wobei das adsorbierende Material eine metallorganische Gerüstverbindung (Metal Organic Framework, MOF), einen Zeolithen, Aktivkohle und/oder Kaliumpermanganat umfasst und
wobei die MOF als Pulver, Partikel, Pellets, Extrudate, Granulate oder freistehender Film vorliegen kann.

2. Nahrungsmittelaufbewahrungssystem nach Anspruch 1, wobei die Langmuir-Oberfläche des adsorbierenden Materials mindestens etwa 700 m²/g beträgt und wobei der durchschnittliche Porendurchmesser des adsorbierenden Materials zwischen etwa 0,3 nm und etwa 10 nm liegt.

3. Nahrungsmittelaufbewahrungssystem nach Anspruch 2, wobei die MOF-Partikel einen durchschnittlichen Teilchendurchmesser von mindestens etwa 5 Mikrometer aufweisen.

4. Nahrungsmittelaufbewahrungssystem nach Anspruch 1 oder 3, wobei die MOF-Partikel ein Metall ausgewählt aus der Gruppe bestehend aus Li, Mg, Ca, Sc, Y, Zr, V, Mn, Fe, Cu, Zn, B, Al und einer Kombination davon umfassen, wobei die MOF-Partikel vorzugsweise ein Metall ausgewählt aus der Gruppe bestehend aus Al, Mg, Zn, Cu, Zr und einer Kombination davon umfassen.

5. Nahrungsmittelaufbewahrungssystem nach einem der Ansprüche 1 bis 3, wobei die MOF-Partikel eine Gruppierung ausgewählt aus der Gruppe bestehend aus einer Phenylgruppierung, einer Alkangruppierung, einer Alkingruppierung, einer Imidazolgruppierung, einer Pyridingruppierung, einer Pyrazolgruppierung, einer Oxolgruppierung und einer Kombination davon umfassen oder wobei die MOF-Partikel mindestens eine Gruppierung ausgewählt aus der Gruppe bestehend aus Fumarsäure, Ameisensäure, 2-Methylimidazol und Trimesinsäure umfassen.

6. Nahrungsmittelaufbewahrungssystem nach einem der Ansprüche 1 bis 5, wobei das adsorbierende Material einen Zeolithen umfasst, wobei die chemische Formel des Zeolithen vorzugsweise eine Form von M_{*x*/*n*}[(AlO₂)*ₓ*(SiO₂)*_{y}*]·*m*H₂O ist, wobei *x, y, m* und n für ganze Zahlen größer als oder gleich 0 stehen und M für ein Metall ausgewählt aus der Gruppe bestehend aus Na, K, B, Fe und Cu steht und/oder wobei das adsorbierende Material ein zeolithisches Material mit einer YO₂ und X₂O₃ umfassenden Gerüststruktur umfasst, wobei:
Y für ein vierwertiges Element steht,
X für ein dreiwertiges Element steht,
Y aus der aus Si, Sn, Ti, Zr, Ge und Kombinationen von zwei oder mehr davon bestehenden Gruppe ausgewählt ist und
X aus der aus Al, B, In, Ga und Kombinationen von zwei oder mehr davon bestehenden Gruppe ausgewählt ist.

7. Nahrungsmittelaufbewahrungssystem nach einem der Ansprüche 1-6, wobei es sich bei dem adsorbierenden Material um ein ein MOF-Material und ein nicht-MOF-Material umfassendes Verbundmaterial handelt, wobei das Verhältnis einer Masse des MOF-Materials zu einer Gesamtmasse des adsorbierenden Materials vorzugsweise größer als 0,5 ist.

8. Nahrungsmittelaufbereitungssystem nach einem der Ansprüche 1-7, wobei das adsorbierende Material eine erste adsorbierende Zusammensetzung und eine zweite adsorbierende Zusammensetzung umfasst.

9. Nahrungsmittelaufbewahrungssystem nach Anspruch 8, wobei die erste adsorbierende Zusammensetzung eine erste Vielzahl von Aluminium und Fumarsäure umfassenden MOF-Partikeln umfasst und wobei die zweite adsorbierende Zusammensetzung eine zweite Vielzahl von Zink und 2-Methylimidazol umfassenden MOF-Partikeln umfasst, wobei das Massenverhältnis von der ersten adsorbierenden Zusammensetzung zur zweiten adsorbierenden Zusammensetzung vorzugsweise mindestens etwa 1 oder mindestens etwa 3 beträgt.

10. Nahrungsmittelaufbewahrungssystem nach einem der Ansprüche 1-7, wobei die erste adsorbierende Zusammensetzung eine erste Vielzahl von Aluminium und Fumarsäure umfassenden MOF-Partikeln umfasst und wobei die zweite adsorbierende Zusammensetzung eine zweite Vielzahl von Aluminiumoxid und Siliciumoxid umfassenden Zeolithpartikeln umfasst, wobei ein Massenverhältnis der erste adsorbierenden Zusammensetzung zur zweiten adsorbierenden Zusammensetzung vorzugsweise mindestens etwa 3 beträgt.

11. Nahrungsmittelaufbewahrungssystem nach einem der Ansprüche 1-10, wobei sich das adsorbierende Material in einem Beutel innerhalb des Behälters befindet.

12. Nahrungsmittelaufbewahrungssystem, umfassend:
einen Behälter,
eine Vielzahl von in dem Behälter dispergierten MOF-Partikeln und
weiterhin umfassend ein in dem Behälter befindliches landwirtschaftliches Erzeugnis.

13. Verfahren zur Verlängerung der Haltbarkeit eines landwirtschaftlichen Erzeugnisses, wobei das Verfahren Folgendes umfasst:
Dispergieren einer Vielzahl von MOF-Partikeln in einem Behälter,
Platzieren des landwirtschaftlichen Produkts in dem Behälter und
Versiegeln des Behälters.

## Revendications

1. Système de stockage d'aliments comprenant :
un récipient ; et
un matériau adsorbant,
une aire de surface de Langmuir du matériau adsorbant étant d'au moins 500 m²/g, et un diamètre moyen de pores du matériau adsorbant étant d'au moins 0,3 nm, le matériau adsorbant comprenant au moins l'un parmi une structure organométallique (MOF), une zéolithe, du carbone activé, et du permanganate de potassium, et
le MOF se trouvant sous forme d'une poudre, de particules, de pastilles, d'extrudats, de granulés, ou d'un film autoporteur.

2. Système de stockage d'aliments selon la revendication 1, l'aire de surface de Langmuir du matériau adsorbant étant d'au moins environ 700 m²/g et le diamètre moyen de pores du matériau adsorbant étant compris entre environ 0,3 nm et environ 10 nm.

3. Système de stockage d'aliments selon la revendication 2, les particules de MOF possédant un diamètre moyen de particule d'au moins environ 5 micromètres.

4. Système de stockage d'aliments selon la revendication 1 ou 3, les particules de MOF comprenant un métal choisi dans le groupe constitué par Li, Mg, Ca, Sc, Y, Zr, V, Mn, Fe, Cu, Zn, B, Al, et une combinaison correspondante, préférablement les particules de MOF comprenant un métal choisi dans le groupe constitué par Al, Mg, Zn, Cu, Zr, et une combinaison correspondante.

5. Système de stockage d'aliments selon l'une quelconque des revendications 1 à 3, les particules de MOF comprenant un fragment choisi dans le groupe constitué par un fragment phényle, un fragment alcane, un fragment alcyne, un fragment imidazole, un fragment pyridine, un fragment pyrazole, un fragment oxole, et une combinaison correspondante ou les particules de MOF comprenant au moins un fragment choisi dans le groupe constitué par l'acide fumarique, l'acide formique, le 2-méthylimidazole, et l'acide trimésique.

6. Système de stockage d'aliments selon l'une quelconque des revendications 1 à 5, le matériau adsorbant comprenant une zéolithe, préférablement une formule chimique de la zéolithe étant d'une forme de M_{*x*/*n*}[(AlO₂)ₓ(SiO₂)_{y}]·*m*H₂O, où *x*, *y*, *m* et *n* sont des entiers supérieurs ou égaux à 0, et M est un métal choisi dans le groupe constitué par Na, K, B, Fe, et Cu et/ou le matériau adsorbant comprenant un matériau zéolithique possédant une structure d'ossature comprenant YO₂ et X₂O₃,
Y étant un élément tétravalent,
X étant un élément trivalent,
Y étant choisi dans le groupe constitué par Si, Sn, Ti, Zr, Ge, et des combinaisons de deux ou plus de ceux-ci, et
X étant choisi dans le groupe constitué par Al, B, In, Ga, et des combinaisons de deux ou plus de ceux-ci.

7. Système de stockage d'aliments selon l'une quelconque des revendications 1 à 6, le matériau adsorbant étant un matériau composite comprenant un matériau de MOF et un matériau non de MOF, préférablement le rapport d'une masse du matériau de MOF à une masse totale du matériau adsorbant étant supérieur à 0,5.

8. Système de stockage d'aliments selon l'une quelconque des revendication 1 à 7, le matériau adsorbant comprenant une première composition d'adsorbant et une deuxième composition d'adsorbant.

9. Système de stockage d'aliments selon la revendication 8, la première composition d'adsorbant comprenant une première pluralité de particules de MOF comprenant de l'aluminium et de l'acide fumarique, et la deuxième composition d'adsorbant comprenant une deuxième pluralité de particules de MOF comprenant du zinc et du 2-méthylimidazole, préférablement le rapport en masse de la première composition d'adsorbant à la deuxième composition d'adsorbant étant d'au moins environ 1 ou d'au moins environ 3.

10. Système de stockage d'aliments selon l'une quelconque des revendications 1 à 7, la première composition d'adsorbant comprenant une première pluralité de particules de MOF comprenant de l'aluminium et de l'acide fumarique, et la deuxième composition d'adsorbant comprenant une deuxième pluralité de particules de zéolithe comprenant de l'oxyde d'aluminium et de l'oxyde de silicium, préférablement le rapport en masse de la première composition d'adsorbant à la deuxième composition d'adsorbant étant d'au moins 3.

11. Système de stockage d'aliments selon l'une quelconque des revendications 1 à 10, le matériau adsorbant étant disposé à l'intérieur d'un sachet à l'intérieur du récipient.

12. Système de stockage d'aliments comprenant :
un récipient ;
une pluralité de particules de MOF dispersée à l'intérieur du récipient ; et
comprenant en outre un produit disposé à l'intérieur du récipient.

13. Procédé pour le prolongement de la durée de conservation d'un produit, le procédé comprenant :
la dispersion d'une pluralité de particules de MOF à l'intérieur d'un récipient ;
le placement du produit à l'intérieur du récipient ; et
le scellement du récipient.
